# EUROPÄISCHE PATENTSCHRIFT

(11) **EP 3 226 527 B1**
(45) Veröffentlichungstag und Bekanntmachung des Hinweises auf die Patenterteilung: **11.03.2020**
(21) Anmeldenummer: 17162652.6
(22) Anmeldetag: 23.03.2017
(51) Int. Cl.: H04M 7/00

(54) **TELEFONIE-KOMMUNIKATIONSSYSTEM ZUR MISSBRAUCHSERKENNUNG IN EINEM ÖFFENTLICHEN TELEFONNETZ**
TELEPHONY COMMUNICATION SYSTEM FOR DETECTING FRAUD IN A PUBLIC TELEPHONE NETWORK
SYSTÈME DE COMMUNICATION PAR TÉLÉPHONE DESTINÉ À DÉTECTER L'UTILISATION ABUSIVE DANS UN RÉSEAU TÉLÉPHONIQUE PUBLIC

(30) Priorität: 01.04.2016 DE 102016106018
(43) Veröffentlichungstag der Anmeldung: 04.10.2017
(73) Patentinhaber: Deutsche Telekom AG, 53113 Bonn (DE)
(72) Erfinder: Martin, Tobias, 35466 Rabenau (DE); Lumma, Gerald, 64293 Darmstadt (DE); Weber, Ulrike, 64625 Bensheim (DE); Wüst, Dieter, 65529 Waldems (DE); Grützmacher, Sönke, 47877 Willich (DE)
(74) Vertreter: Vossius & Partner Patentanwälte Rechtsanwälte mbB

(56) Entgegenhaltungen:
- US-A1- 2007 036 314
- US-A1- 2008 084 975
- US-A1- 2014 376 705

## Beschreibung

Die vorliegende Erfindung betrifft das Gebiet der Erkennung von Störungen und Missbrauch in öffentlichen Telefonnetzen, insbesondere eine musterbasierte Missbrauchserkennung von gehackten TK-Anlagen in einem öffentlichen Telefonnetz.

Das Hacking von Telefonanlagen (TK-Anlagenhacking, engl. PBX-Hacking) bezeichnet eine Missbrauchsmethode, die in der Telekommunikationsindustrie jährlich weltweit einen Schaden von bis zu 5 Mrd. USD verursacht (siehe hierzu: Communications Fraud Control Association (CFCA), Worldwide Telecom Fraud Survey, Stand: 2013). Die Täter (Hacker, Fraudster) verschaffen sich dabei unbefugt Zugriff auf eine Telekommunikationsanlage, meist Nebenstellenanlage von Geschäftskunden oder Internet-Router mit Telefonfunktionen, um diese TK-Anlagen zu manipulieren und missbräuchlich Telefongespräche zu meist internationalen Zielrufnummern zu generieren. Dabei werden Anrufweiterleitungen zu internationalen Zielen eingerichtet, Weitervermittlungsfunktionen von Sprachboxen ausgenutzt oder zusätzliche Nebenstellen eingerichtet, die vom Täter genutzt werden können.

Die Täter benutzen die manipulierten Telefonanlagen, um massenhaft Verkehr zu internationalen Zielrufnummern zu generieren, aus denen sie eine Umsatzbeteiligung (engl. Revenue Share) generieren. Dabei spricht man von International Revenue Share Fraud (IRSF). Bei diesen IRSF-Zielrufnummern kann es sich um internationale Premiumrufnummern handeln, bei denen die Täter unmittelbar eine Umsatzbeteiligung aus eingehenden Telefongesprächen erhalten.

In vielen Fällen werden von Hackern aber auch Rufnummern oder Rufnummerngassen in Ländern mit sehr hohen Terminierungsentgelten genutzt. Das Terminierungsentgelt wird fällig, wenn ein internationales Telefongespräch von einem Verbindungsnetzbetreiber (Carrier) im Netz eines Teilnehmernetzbetreibers (Operator) terminiert wird. Dabei stellen Teilnehmernetzbetreiber in Übersee, beispielsweise kleine Inselstaaten im Pazifik oder dünn besiedelte Länder aufgrund der hohen Betriebskosten besonders hohe Terminierungsentgelte in Rechnung. Kriminelle Organisationen treten im internationalen Telekommunikationsgeschäft als Carrier auf und geben vor, Telefongespräche in diese Länder zu günstigen Preisen zu terminieren. In Wirklichkeit wird der Verkehr jedoch nicht terminiert, stattdessen werden die Terminierungsentgelte einbehalten. Da der Verkehr durch TK-Anlagenhacking künstlich erzeugt wurde, fällt es dem "Anrufer" meist nicht auf, dass keine Terminierung stattfindet. Solche Verkehre werden auch mit dem Begriff Short-Stop-Traffic beschrieben.

Telekommunikationsanbieter haben daher ein erhebliches Interesse an der frühzeitigen Erkennung und Unterbindung von solch künstlich generiertem Telefonverkehr aus manipulierten Telefonanlagen. Zur Erkennung dieser missbräuchlich generierten Verkehre betreiben die meisten Telekommunikationsanbieter Missbrauchserkennungssysteme, welche die Verkehrsdaten verarbeiten, und mit vorkonfigurierten Regeln künstlich generierte Verkehre oder Massenverkehre erkennen und den Betreiber alarmieren. Die meisten dieser Missbrauchserkennungssysteme arbeiten dabei regelbasiert.

Bei einem regelbasierten Missbrauchserkennungssystem wird die Anzahl der Gespräche und Verkehrsminuten zu bestimmten internationalen Zielrufnummern und/oder die dafür anfallenden Entgelte in einer bestimmten Zeitspanne gezählt. Übersteigt einer oder mehrere dieser Parameter einen in der Regel konfigurierten Schwellwert, wird ein Alarm ausgelöst. In der Folge findet dann meist eine manuelle Prüfung des Missbrauchsverdachtsfalls statt. Anschließend können weitere Maßnahmen, wie die Information des betroffenen Kunden oder die Sperrung des Anschlusses für Auslandsgespräche, eingeleitet werden.

Diese Erkennungsmethode mit Hilfe von schwellwertbasierten Regeln hat jedoch den Nachteil, dass zunächst ein gewisser Schaden entstanden sein muss, bevor der Schwellwert erreicht und der Alarm ausgelöst wird. Der missbräuchlich generierte Verkehr bis zum Erreichen des Schwellwerts verursacht also einen gewissen "Grundschaden", der vom TK-Dienstanbieter und/oder dessen geschädigten Kunden zu tragen ist. Durch die Missbrauchserkennung und die Einleitung von Gegenmaßnahmen wird lediglich ein höherer Schaden vermieden. Des Weiteren birgt diese Methode die Gefahr, dass der Hacker systematisch versucht, den Schwellwert zu unterlaufen und trotzdem, über einen längeren Zeitraum hinweg, künstliche Verkehre generiert.

Der Administrator des Missbrauchserkennungssystems sollte die Schwellwerte jedoch nicht zu gering ansetzen, da dies die Gefahr von Fehlalarmen birgt. Insbesondere gebieten datenschutzrechtliche Grundprinzipien der Datenvermeidung und Datensparsamkeit sowie das Fernmeldegeheimnis, dass die Schwellwerte nicht zu niedrig angesetzt werden und damit vermieden wird, dass normaler Telekommunikationsverkehr einen Alarm im System auslöst.

Eine weitere in der Telekommunikationsindustrie weit verbreitete Gegenmaßnahme gegen IRSF ist die Sperre von auffällig gewordenen IRSF-Zielrufnummerngassen, also von Rufnummern und Rufnummernblöcken, die bereits in der Vergangenheit für künstlich generierte Verkehre durch gehackte TK-Anlagen verwendet wurden. Man bezeichnet solche auffällig gewordenen Ziel- bzw. B-Rufnummern auch als "Hot-B-Number", die entsprechenden Listen werden als "Hot-B-Number-List" bezeichnet. Ein TK-Dienstanbieter kann die Zielrufnummern oder Zielrufnummerngassen aus den Hot-B-Number-Listen vorsorglich sperren, so dass zu diesen Zielen keine internationalen Gespräche mehr geführt und auch keine Terminierungsentgelte mehr missbräuchlich generiert werden können.

Diese Hot-B-Number-Sperren bergen jedoch die Gefahr, dass versehentlich auch die Rufnummern von legitimen ausländischen Telekommunikationsteilnehmern gesperrt werden. Die Täter, die an den Umsatzbeteiligungen aus den internationalen Terminierungsentgelten partizipieren möchten, verwenden zum Teil auch Rufnummernbereiche, die eigentlich legitimen Teilnehmern zugeordnet sind. Die Täter generieren beispielsweise Verkehr zu diesen Zielen aus gehackten TK-Anlagen und verhindern gleichzeitig regulären Verkehr zu diesen Zielen. Die legitimen Teilnehmer sind dann temporär telefonisch nicht mehr erreichbar. Man spricht in diesem Zusammenhang auch von "Number-Highjacking". Werden nun die Rufnummern oder Rufnummerngassen durch Telekommunikationsanbieter gesperrt, um IRSF zu verhindern, sind die entsprechenden Teilnehmer nicht mehr erreichbar, was zu Beschwerden bei den Telekommunikationsanbietern führen kann.

Ein weiterer Nachteil der Sperre ist, dass es den Telekommunikationsanbietern in der Regel nicht bekannt ist, für wie lange die Rufnummern oder Rufnummerngassen von den Tätern zur Terminierungsentgeltgenerierung genutzt werden. Üblicherweise werden die Rufnummern nur für einen begrenzten Zeitraum missbraucht und die Täter wechseln die Rufnummern bzw. Rufnummernbereiche für den Missbrauch regelmäßig. Die Zielrufnummernsperren müssen also nach einer gewissen Zeit wieder aufgehoben werden. Geschieht dies zu früh, können weitere Schäden entstehen, geschieht dies zu spät, können die Sperrlisten zu groß werden und die Kapazität in den Netzelementen übersteigen.

Es besteht daher ein großer Bedarf nach Vorrichtungen und Verfahren zur Missbrauchserkennung in Telefonnetzen, welche einerseits ein besonders schnelles Erkennen von Missbrauchsversuchen ermöglichen, um anfallende Kosten zu vermeiden, und welche andererseits die Gefahr eines irrtümlichen oder versehentlichen Sperrens von Rufnummern legitimer Telekommunikationsteilnehmer vermeiden.

Die Druckschrift US 2014/0376705 A1 offenbart ein System und ein Verfahren zur Missbrauchsminderung in VolP PBX Systemen. Dabei werden potentielle Missbräuche basierend auf einer Mehrzahl von konfigurierbaren Missbrauchsindikatoren sowie historischen Daten detektiert. Das System kann potentiell missbräuchliche Anrufe terminieren und potentiell kompromittierte Netzwerkzugangsdaten zurücksetzen. Ferner kann das System die historischen Daten zum Blockieren weiterer Anrufe verwenden.

Die Druckschrift US 2007/0036314 A1 offenbart ein System und ein Verfahren zum Detektieren von Erweiterungsangriffen gegen ein Kommunikationsunternehmen. Ein oder mehrere Attribute eines verdächtigen Anrufes werden analysiert, und ein Risiko wird jedem analysierten Attribut zugeordnet. Ferner kann ein Gesamtrisiko der analysierten Attribute erstellt werden, woraufhin Gegenmaßnahmen ergriffen werden können.

Die Druckschrift US 2008/0084975 A1 offenbart ein System und ein Verfahren zur automatisierten Verwaltung eingehender Anrufe, wobei Anrufsignaturen erstellt werden können, welche für eine spätere Analyse verwendet werden können. Dabei können ein Verdächtigkeitswert und ein Konfidenzniveau für jeden eingehenden Anruf berechnet werden. Ferner kann eine Anrufbehandlung entsprechend gewählt werden.

Es ist eine Aufgabe der vorliegenden Erfindung, ein effizientes Konzept zur Auswertung von Verkehrsdaten von Telefonverbindungen in einem öffentlichen Telefonnetz und zum Erkennen von Missbrauchsversuchen, insbesondere International Revenue Share Fraud, und Störungen in dem öffentlichen Telefonnetz zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Gemäß einem ersten Aspekt betrifft die Erfindung ein Telefonie-Kommunikationssystem zur Missbrauchserkennung in einem öffentlichen Telefonnetz, an welches ein Telefonnetzteilnehmer angeschaltet ist, mit einem Telefonanlagenserver, welcher ausgebildet ist, einen Nebenstellenteilnehmer einer Telefonanlage in dem öffentlichen Telefonnetz zu emulieren, um die Existenz des emulierten Nebenstellenteilnehmers der Telefonanlage gegenüber einer Angriffsentität vorzutäuschen, wobei der Telefonanlagenserver ausgebildet ist, von der Angriffsentität einen Steuerbefehl zum Aufbauen einer Telefonverbindung zwischen dem emulierten Nebenstellenteilnehmer und dem Telefonnetzteilnehmer in dem öffentlichen Telefonnetz zu empfangen, wobei der Telefonanlagenserver ausgebildet ist, ansprechend auf das Empfangen des Steuerbefehls eine Verbindungsanfrage an den Telefonnetzteilnehmer auszusenden, um den Aufbau der Telefonverbindung zwischen dem emulierten Nebenstellenteilnehmer und dem Telefonnetzteilnehmer zu initialisieren, wobei die Verbindungsanfrage eine Telefonnetzadresse des Telefonnetzteilnehmers in dem öffentlichen Telefonnetz umfasst, und einer Telefonnetz-Missbrauchserkennungsvorrichtung, wobei der Telefonanlagenserver ausgebildet ist, die Telefonnetzadresse des Telefonnetzteilnehmers an die Telefonnetz-Missbrauchserkennungsvorrichtung zu übertragen, wobei die Telefonnetz-Missbrauchserkennungsvorrichtung ausgebildet ist, einen Missbrauchsversuch in dem öffentlichen Telefonnetz, insbesondere in einem Teilnehmernetz des öffentlichen Telefonnetzes, auf der Basis der übertragenen Telefonnetzadresse des Telefonnetzteilnehmers zu erkennen. Dadurch wird der Vorteil erreicht, dass Telefonnetzadressen von Angreifern genutzter Telefonnetzteilnehmer effizient erfasst werden können. Auf der Basis dieser Telefonnetzadressen kann eine Missbrauchserkennung im öffentlichen Telefonnetz und eine Erkennung von erneuten Angriffen bzw. Missbrauchsversuchen erfolgen. Die Missbrauchserkennung bzw. die Erkennung von Missbrauchsversuchen in dem öffentlichen Telefonnetz kann ein Erkennen von Störungen bzw. Störungsversuchen in dem öffentlichen Telefonnetz umfassen.

Der Telefonanlagenserver kann als zweiter Telefonnetzteilnehmer oder als Telefonanlage an das öffentliche Telefonnetz angeschaltet sein. Der Telefonanlagenserver ist ausgebildet den Nebenstellenteilnehmer insbesondere als Nebenstellenteilnehmer einer Telefonanlage zu emulieren. Hierbei kann der Telefonanlagenserver den Nebenstellenteilnehmer und die zugehörige Telefonanlage des Nebenstellenteilnehmers emulieren. Der Telefonanalgenserver kann die Telefonanlage als eine Telefonanlage emulieren, welche an das öffentliche Telefonnetz angeschaltet ist. Ferner kann der Telefonanalgenserver selbst als Telefonanlage ausgebildet sein, und kann selbst die Telefonanlage des emulierten Nebenstellenteilnehmers bilden. Die Emulation des Nebenstellenteilnehmers und/oder der Telefonanlage durch den Telefonanlagenserver kann die Nachbildung, insbesondere die virtuelle Nachbildung, oder die Simulation des Nebenstellenteilnehmers und/oder der Telefonanlage durch den Telefonanalgenserver umfassen.

Der Telefonanlagenserver bildet oder umfasst ein Telefonanlagen-Lockvogelsystem, einen Telefonanlagen-Honeypot oder einen PBX-Honeypot. Der Telefonanlagenserver kann ferner eine IP- Telefonanlage, insbesondere Voice-over-IP-Telefonanlage oder eine IP-PBX auf der Basis der Open-Source-Software Asterisk oder einer anderen Voice-over-IP-Telefonanlagensoftware, umfassen. Der Telefonanlagenserver kann mit dem Internet und/oder mit einem Telefonnetz verbunden sein, und ist ausgebildet, über das Internet und/oder das Telefonnetz Steuerbefehle zum Aufbau von Telefonverbindungen mit Telefonnetzteilnehmern in dem öffentlichen Telefonnetz zu empfangen.

Der Telefonanlagenserver kann über eine Teilnehmeranschlussleitung mit dem öffentlichen Telefonnetz bzw. mit einem Teilnehmernehmernetz eines Telefonnetzbetreibers verbunden sein. Der Telefonanlagenserver kann auch über einen Anlagenanschluss, beispielsweise einen Primärmultiplexeranschluss oder SIP-Trunk, mit dem öffentlichen Telefonnetz verbunden sein. Der Anlagenanschluss des Telefonanalgenserver kann als "All-IP-Anschluss", beispielsweise ein Internet-Anschluss mit Voice-over-IP, ausgebildet sein. Ferner kann der Telefonanlagenserver einen Internetanschluss und einen separaten Telefonanschluss, beispielsweise einen ISDN-Anschluss oder einen Primärmultiplexeranschluss, umfassen, über den abgehende Telefonverbindungen ins öffentliche Netz ausgegeben werden können.

Der Telefonanlagenserver kann einen Speicher zum Speichern der Telefonnetzadressen und einen Prozessor zur Steuerung der Emulation des Nebenstellenteilnehmers umfassen. Der Prozessor ist ferner ausgebildet, den Steuerbefehl der Angriffsentität zu verarbeiten und den Verbindungsaufbau zu initialisieren.

Die Angriffsentität kann ein Angreifer, ein Hacker oder ein Fraudster, oder ein von einem Angreifer, einem Hacker oder einem Fraudster genutzte Entität, beispielsweise ein Server oder ein Computer, sein. Die Angriffsentität kann den Telefonanlagenserver über das Internet oder das Telefonnetz ausfindig machen und mit Steuerbefehlen zum Aufbauen von Telefonverbindungen ansteuern. Ferner kann die Angriffsentität den Telefonanlagenserver über das Telefonnetz mit Steuerbefehlen ansteuern, insbesondere wenn der Telefonanlagenserver einen ISDN-Anschluss umfasst. Die Angriffsentität ruft hierzu beispielsweise die Durchwahlnummer einer Nebenstelle an, um mit einer Sprachmailbox verbunden zu werden. Die Angriffsentität versucht anschließend beispielsweise über Eingabe von DTMF-Steuerbefehlen über die Telefonleitung die Sprachmailbox zu steuern, um diese zum Aufbau einer ausgehenden Sprachverbindung zu missbrauchen ("Call-Through"). Der Telefonanlagenserver kann ausgebildet sein, auf den Durchwahlnummern der emulierten Nebenstelle eine Sprachmailbox zu emulieren, um der Angriffsentität eine Übermittlung von Steuerbefehlen über die emulierte Sprachmailbox zu ermöglichen.

Die von der Angriffsentität übermittelten Steuerbefehle können jeweils eine Kennung des emulierten Nebenstellenteilnehmers, insbesondere eine Nebenstellenrufnummer des emulierten Nebenstellenteilnehmers, ein Passwort des emulierten Nebenstellenteilnehmers und die Telefonnetzadresse des Telefonnetzteilnehmers, umfassen. Die Steuerbefehle können ferner jeweils die IP-Adresse der Angriffsentität umfassen. Alternativ kann der Telefonanlagenserver ausgebildet sein, die IP-Adresse der Angriffsentität zu erfassen und zu speichern. Der Telefonanlagenserver ist ferner ausgebildet die Telefonnetzwerkadresse des Telefonnetzteilnehmers zu erfassen, insbesondere bei Empfang des Steuerbefehls und/oder bei Aussenden der Verbindungsanfrage.

Die Angriffsentität sendet zum Beispiel eine Vielzahl an Steuerbefehlen an den Telefonanlagenserver, um die Nebenstellenrufnummer und das Passwort des emulierten Nebenstellenteilnehmers zu erraten. Der Telefonanlagenserver kann dabei ausgebildet sein, den emulierten Nebenstellenteilnehmer mit einem besonders leicht zu erratenden Passwort wie "123456" und einer besonders kurzen oder offensichtlichen Nebenstellenrufnummer zu emulieren, um die Wahrscheinlichkeit eines erfolgreichen Angriffs zu erhöhen, und gleichzeitig eine aus Sicht der Angriffsentität glaubwürdige Telefonanlage mit überwindbaren Sicherheitsmaßnahmen vorzutäuschen.

Die Telefonnetzadresse des Telefonnetzteilnehmers kann eine Telefonnummer bzw. eine Rufnummer oder eine Zielrufnummer oder eine SIP-URI des Telefonnetzteilnehmers in dem öffentlichen Telefonnetz umfassen. Die Telefonnummer kann eine Vorwahl, insbesondere eine Ländervorwahl, umfassen. Der Telefonanlagenserver kann ausgebildet sein, den Verbindungsaufbau nur bei Vorwählen einer Kennziffer, beispielsweise "0", vor die Telefonnummer zu initialisieren. Die Angriffsentität kann deshalb eine Vielzahl an Steuerbefehlen mit Telefonnummern des Telefonnetzteilnehmers mit jeweils unterschiedlichen vorgewählten Kennziffern an den Telefonanlagenserver senden, um die richtige Kennziffer zu erraten.

Der Telefonnetzteilnehmer kann ein erster Telefonnetzteilnehmer in dem Telefonnetz sein, an welchen weitere Telefonnetzteilnehmer in dem öffentlichen Telefonnetz Verbindungsanfragen aussenden können. Der Telefonnetzteilnehmer ist beispielsweise eine weitere Telefonanlage, insbesondere eine Telefonanlage mit einer IRSF-Zielrufnummer, oder ein Mobiltelefon. Das Mobiltelefon kann sich im Besitzt des Angreifers befinden. Die Angriffsentität kann eine Verbindungsanfrage an das Mobiltelefon zu Testzwecken senden, insbesondere um Kennziffern zu testen, oder um zu testen ob der Telefonanlagenserver einen Anruf an eine Telefonnummer mit einer Auslands-Ländervorwahl gestattet. Der Telefonnetzteilnehmer kann ferner ein virtueller Telefonnetzteilnehmer oder ein emulierter Telefonnetzteilnehmer sein, welcher beispielsweise von einem mit dem öffentlichen Telefonnetz verbundenen Server erzeugt wird. Die Telefonnetzadresse des Telefonnetzteilnehmers kann eine Premiumrufnummer sein, an deren Umsatz der Angreifer beteiligt ist.

Das öffentliche Telefonnetz kann Anschlüsse in verschiedenen Ländern oder geografischen Regionen umfassen. Beispielsweise ist der Telefonnetzteilnehmer in einem anderen Land an das öffentliche Telefonnetz angeschlossen als der Telefonanlagenserver. Das öffentliche Telefonnetz kann ferner in Telefonnetze unterschiedlicher Telefonnetzbetreiber unterteilt sein, oder kann eine Vielzahl an Telefonnetzen unterschiedlicher Telefonnetzbetreiber umfassen. Das öffentliche Telefonnetz kann ferner eine Vielzahl von Teilnehmer- bzw. Verbindungsnetze umfassen. Der Telefonanlagenserver ist beispielsweise an ein Teilnehmernetz eines Teilnehmernetzbetreibers angeschaltet, und der Telefonnetzteilnehmer ist beispielsweise an ein weiteres Teilnehmernetz eines weiteren Teilnehmernetzbetreibers angeschaltet.

Das Teilnehmernetz und das weitere Teilnehmernetz können über ein Verbindungsnetz verbunden sein.

Das Telefonie-Kommunikationssystem kann zur Missbrauchserkennung in einem Teilnehmernetz des öffentlichen Telefonnetzes ausgebildet sein. Insbesondere kann die Telefonnetz-Missbrauchserkennungsvorrichtung ausgebildet sein, Missbrauchsversuche in einem Teilnehmernetz des öffentlichen Telefonnetzes zu erkennen.

Der Telefonanlagenserver kann ausgebildet sein, im Falle eines Zustandekommens einer Telefonverbindung zwischen dem emulierten Nebenstellenteilnehmer und dem Telefonnetzteilnehmer Verkehrsdaten der Telefonverbindung, beispielsweise eine Dauer der Telefonverbindung, zu erfassen und zu speichern.

Das Telefonie-Kommunikationssystem umfasst eine Verbindungssteuerungsvorrichtung, wobei die Verbindungssteuerungsvorrichtung zwischen den Telefonanlagenserver und das öffentliche Telefonnetz zwischengeschaltet ist, wobei die Verbindungssteuerungsvorrichtung ausgebildet ist, die Verbindungsanfrage des Telefonanlagenservers zu empfangen und zum Aufbauen der Telefonverbindung an den Telefonnetzteilnehmer in dem öffentlichen Telefonnetz weiterzuleiten. Dadurch wird der Vorteil erreicht, dass die Telefonverbindung zwischen dem emulierten Nebenstellenteilnehmer und dem Telefonnetzteilnehmer effizient über die Verbindungssteuerungsvorrichtung aufgebaut werden kann.

Die Verbindungssteuerungsvorrichtung kann einen Voice-over-IP Gateway und/oder einen SIP-Proxy, insbesondere einen SIP-Proxyserver, umfassen. Die Verbindungssteuerungsvorrichtung kann den Telefonanlagenserver mit dem öffentlichen Telefonnetz verbinden. Die Verbindungssteuerungsvorrichtung kann als Modul zur Anrufs- und Verbindungssteuerung ausgebildet sein, oder kann ein Modul zur Anrufs- und Verbindungssteuerung umfassen.

Gemäß einer Ausführungsform ist die Verbindungssteuerungsvorrichtung ausgebildet, die Telefonnetzadresse des Telefonnetzteilnehmers vor der Weiterleitung der Verbindungsanfrage mit Telefonnetzadressen in einer dynamischen Referenzliste, insbesondere einer dynamischen Blacklist, zu vergleichen, wobei die Verbindungssteuerungsvorrichtung ausgebildet ist, die Verbindungsanfrage nicht weiterzuleiten, wenn die Telefonnetzadresse in der dynamischen Referenzliste enthalten ist. Dadurch wird der Vorteil erreicht, dass ein Verbindungsaufbau nur mit noch unbekannten von Angreifern genutzten Telefonnetzteilnehmern zustande kommen kann. Die Angriffsentität kann somit veranlasst werden Steuerbefehle zum Verbindungsaufbau mit noch unbekannten Telefonnetzteilnehmern auszusenden, wodurch ein Erfassen von Telefonnetzadressen von möglichst vielen noch unbekannten von Angreifern verwendeten Telefonnetzteilnehmern ermöglicht wird.

Gemäß einer Ausführungsform ist die Verbindungssteuerungsvorrichtung ausgebildet, die Telefonnetzadresse des Telefonnetzteilnehmers nach Weiterleitung der Verbindungsanfrage in der dynamischen Referenzliste zu speichern. Dadurch wird der Vorteil erreicht, dass ein Verbindungsaufbau nur mit noch unbekannten von Angreifern genutzten Telefonnetzteilnehmern zustande kommen kann.

Gemäß einer Ausführungsform ist die Verbindungssteuerungsvorrichtung ausgebildet, die aufgebaute Telefonverbindung zwischen dem emulierten Nebenstellenteilnehmer und dem Telefonnetzteilnehmer nach einem voreingestellten Zeitintervall zu unterbrechen. Dadurch wird der Vorteil erreicht, dass die Entstehung hoher Kosten Aufgrund einer langandauernden Telefonverbindung mit einer IRSF-Zielrufnummer vermieden werden kann.

Gemäß einer Ausführungsform ist der Telefonanlagenserver ausgebildet, die Verbindungsanfrage, insbesondere die Telefonnetzadresse des Telefonnetzteilnehmers und/oder den zugehörigen Steuerbefehl in einer Look-up-Table zu speichern. Dadurch wird der Vorteil erreicht, dass die Daten der Verbindungsanfrage zur Analyse und Visualisierung geordnet bzw. sortiert werden können. Die Verbindungsanfrage kann Signalisierungsdaten umfassen.

Der Telefonanlagenserver kann ausgebildet sein, eine Netzwerkadresse der Angriffsentität, insbesondere eine IP-Adresse der Angriffsentität, zu erfassen und in der Look-up-Table zu speichern. Der Telefonanlagenserver kann ferner ausgebildet sein, bei Zustandekommen der Telefonverbindung mit dem Telefonnetzteilnehmer die Verkehrsdaten der Telefonverbindung, beispielsweise eine Dauer der Telefonverbindung, in der Look-up-Table zu speichern. Die Look-up-Table kann eine Datenbank bilden.

Gemäß einer Ausführungsform umfasst der Telefonanlagenserver eine Visualisierungseinrichtung zur Visualisierung der Look-up-Table. Der Telefonanlagenserver kann über einen Computer ansteuerbar sein, um auf die Look-up-Table zuzugreifen und diese zu visualisieren. Beispielsweise mittels eines Datenvisualisierungs-Plugins wie Kibana. Die Look-up-Table kann dabei mittels einer Suchmaschine bzw. einem Suchserver (search server) wie Elasticsearch durchsuchbar bzw. sortierbar sein.

Gemäß einer Ausführungsform ist der Telefonanlagenserver ausgebildet, in der Look-up-Table gespeicherte Telefonnetzadressen, insbesondere die Telefonnetzadresse des Telefonnetzteilnehmers, auf der Basis einer einstellbaren Übertragungsregel an die Telefonnetz-Missbrauchserkennungsvorrichtung zu übertragen. Dadurch wird der Vorteil erreicht, dass eine effiziente Missbrauchserkennung in dem öffentlichen Telefonnetz auf der Basis von Telefonnetzadressen der von Angriffsentitäten genutzten Telefonnetzteilnehmer erfolgen kann.

Die Übertragungsregel kann festlegen, dass nur Telefonnetzadressen mit ausländischen Zielrufnummern übertragen werden. Das Übertragen der Telefonnetzadressen kann ein Exportieren der Telefonnetzadressen umfassen.

Gemäß einer Ausführungsform umfasst die Telefonnetz-Missbrauchserkennungsvorrichtung einen Speicher zum Speichern der Telefonnetzadresse des Telefonnetzteilnehmers, insbesondere in einer in dem Speicher hinterlegten Greylist. Dadurch wird der Vorteil erreicht, dass die Telefonnetz-Missbrauchserkennungsvorrichtung effizient auf die von dem Telefonanlagenserver gesammelten bzw. erfassten Telefonnetzadressen zurückgreifen kann. Der Speicher kann in die Telefonnetz-Missbrauchserkennungsvorrichtung integriert sein. Der Speicher kann ferner ein externer Speicher, beispielsweise ein Server-Speicher, sein, mit welchem die Telefonnetz-Missbrauchserkennungsvorrichtung kommunikationstechnisch verbunden ist, um auf die Greylist zuzugreifen. Die Greylist kann eine Vielzahl an von dem Telefonanlagenserver gesammelten bzw. erfassten Telefonnetzadressen enthalten.

Gemäß einer Ausführungsform ist die Telefonnetz-Missbrauchserkennungsvorrichtung ausgebildet, Signalisierungsdaten von weiteren Telefonnetzteilnehmern in dem öffentlichen Telefonnetz, insbesondere von weiteren Telefonnetzteilnehmern in einem Teilnehmernetz des öffentlichen Telefonnetzes, zu verarbeiten, wobei die Signalisierungsdaten Telefonnetzadressen von Verbindungsanfragen der weiteren Telefonnetzteilnehmer umfassen, wobei die Telefonnetz-Missbrauchserkennungsvorrichtung ausgebildet ist, die Telefonnetzadressen der Signalisierungsdaten mit in dem Speicher gespeicherten Telefonnetzadressen zu vergleichen, um Verbindungsanfragen der weiteren Telefonnetzteilnehmer in dem öffentlichen Telefonnetz an Telefonnetzteilnehmer, deren Telefonnetzadressen in dem Speicher gespeichert sind, zu detektieren. Dadurch wird der Vorteil erreicht, dass Angriffe auf Telefonnetzteilnehmer in dem öffentlichen Telefonnetz effizient detektiert werden können.

Die Teilnehmer in dem öffentlichen Telefonnetz können Telefonanlagen, insbesondere Telefonanlagen mit einer Internetverbindung, Nebenstellenanlagen oder Voice-over-IP-Router sein. Die Telefonnetzadressen in dem Speicher können Telefonnetzadressen sein, welche zuvor mit dem Telefonanalgenserver erfasst und an die Telefonnetz-Missbrauchserkennungsvorrichtung übermittelt wurden. Die Telefonnetzadressen können somit bekannten Telefonnetzteilnehmer, insbesondere dem Telefonnetzteilnehmer, zugeordnet werden, welche von Angriffsentitäten bereits zuvor für Angriffe genutzt wurden, insbesondere als Ziele der von den Angriffsentitäten veranlassten Verbindungsanfragen.

Das Verarbeiten der Signalisierungsdaten durch die Telefonnetz-Missbrauchserkennungsvorrichtung kann ein Empfangen der Signalisierungsdaten aus dem öffentlichen Telefonnetz, insbesondere von Teilnehmern in einem Teilnehmernetz des öffentlichen Telefonnetzes, und ein Analysieren dieser Signalisierungsdaten, insbesondere ein Vergleichen der Telefonnetzadressen der Signalisierungsdaten mit in dem Speicher gespeicherten Telefonnetzadressen, umfassen.

Gemäß einer Ausführungsform ist die Telefonnetz-Missbrauchserkennungsvorrichtung ausgebildet, bei der Detektion von Verbindungsanfragen der weiteren Telefonnetzteilnehmer in dem öffentlichen Telefonnetz an Telefonnetzteilnehmer, deren Telefonnetzadressen in dem Speicher gespeichert sind, ein Warnsignal auf der Basis einer Filterregel auszusenden. Dadurch wird der Vorteil erreicht, dass eine effiziente Warnung der angegriffenen Teilnehmer erfolgen kann.

Das Warnsignal kann eine Missbrauchswarnung an den Telefonnetzbetreiber oder den Telefonnetzteilnehmer, welcher die Verbindungsanfragen an den von der Angriffsentität genutzten Telefonnetzteilnehmer aussendet, oder an den Telefonnetzbetreiber und den Telefonnetzteilnehmer, umfassen. Eine vorteilhafte Ausgestaltung der Filterregel kann das Risiko eines irrtümlichen Aussendens der Warnmeldung verringern.

Gemäß einer Ausführungsform umfasst die Filterregel eine Mehrzahl an Bedingungen, insbesondere ein Detektieren einer voreingestellten Anzahl an Verbindungsanfragen an einen oder mehrere Telefonnetzteilnehmer, deren Telefonnetzadressen in dem Speicher gespeichert sind, und ein Detektieren von Verbindungsanfragen an eine voreingestellte Anzahl unterschiedlicher Telefonnetzteilnehmer, deren Telefonnetzadressen in dem Speicher gespeichert sind, wobei die Telefonnetz-Missbrauchserkennungsvorrichtung ausgebildet ist, das Warnsignal ansprechend auf das Erfüllen der Mehrzahl an Bedingungen der Filterregel durch einen weiteren Telefonnetzteilnehmer in dem öffentlichen Telefonnetz, insbesondere in einem Teilnehmernetz des öffentlichen Telefonnetzes, auszusenden. Dadurch wird der Vorteil erreicht, dass das Risiko eines irrtümlichen Aussendens der Warnmeldung verringert werden kann. Der weitere Telefonnetzteilnehmer in dem öffentlichen Telefonnetz kann ein Telefonnetzteilnehmer in einem Teilnehmernetz sein, welchem die Telefonnetz-Missbrauchserkennungsvorrichtung zugeordnet ist.

Die Filterregel definiert beispielsweise, dass nur dann ein Warnsignal an einen Telefonnetzteilnehmer ausgesendet wird, wenn der Telefonnetzteilnehmer innerhalb von vier Stunden 20 Anwählversuche zu Zielrufnummern auf der Greylist durchführt, und mindestens vier unterschiedliche Zielrufnummern auf der Greylist anwählt und Zielrufnummer auf der Greylist in mindestens drei unterschiedlichen Zielländern anwählt.

Ferner können mehrere Filterregeln bzw. Filter miteinander verknüpft werden. Beispielsweise kann eine Liste mit "Testrufnummern", welche von den Angreifern vor den eigentlichen IRSF-Zielen angewählt werden, als Vorfilter fungieren, und eine weitere Liste mit "IRSF-Zielen" kann als Hauptfilter fungieren. Alternativ kann eine Filterregel auf der Basis der Greylist mit einer weiteren Filterregel auf der Basis eines Schwellwertes verknüpft werden.

Gemäß einer Ausführungsform umfasst das Telefonie-Kommunikationssystem eine Speichervorrichtung, welche zwischen den Telefonanlagenserver und die Telefonnetz-Missbrauchserkennungsvorrichtung zwischengeschaltet ist, wobei die Speichervorrichtung ausgebildet ist, die Telefonnetzadressen des Telefonnetzteilnehmers vor der Übertragung an die Telefonnetz-Missbrauchserkennungsvorrichtung zur Datenaufbereitung in einer Datenbank zwischenzuspeichern.

Die Speichervorrichtung kann einen Speicher, insbesondere einen Server-Speicher oder einen Netzwerkspeicher, umfassen, in welchem die Datenbank abgespeichert ist. Die Speichervorrichtung kann ausgebildet sein, zwischengespeicherte Telefonnetzadressen nach der Datenaufbereitung an die Telefonnetz-Missbrauchserkennungsvorrichtung, insbesondere in Form der Greylist, auszusenden.

Gemäß einer Ausführungsform ist die Speichervorrichtung ausgebildet, in der Datenbank zwischengespeicherte Telefonnetzadressen hinsichtlich einer Charakteristik der Telefonnetzadressen, insbesondere einer Ziffernfolge der Telefonnetzadressen, zusammenzufassen und die zusammengefassten Telefonnetzadressen an die Telefonnetz-Missbrauchserkennungsvorrichtung zu übertragen. Dadurch wird der Vorteil erreicht, dass durch die Gruppierung der Telefonnetzadressen die Anzahl der individuell an die Telefonnetz-Missbrauchserkennungsvorrichtung übertragenen Telefonnetzadressen reduziert werden kann.

Die Speichervorrichtung kann ausgebildet sein, Telefonnetzadressen mit fortlaufenden Rufnummern zu Rufnummerngassen zu aggregieren. Durch die Aggregation kann eine Anzahl von in der Telefonnetz-Missbrauchserkennungsvorrichtung gespeicherten Rufnummern reduziert werden.

Gemäß einer Ausführungsform ist die Speichervorrichtung ausgebildet, die Telefonnetzadressen mit einem Zeitstempel in der Datenbank zu speichern, wobei der Zeitstempel den Zeitpunkt des Aussendens der zu der Telefonnetzadresse zugehörigen Verbindungsanfrage durch die Angriffsentität angibt. Dadurch wird der Vorteil erreicht, dass aktuell von Angriffsentitäten genutzte Telefonnetzadressen von veralteten und evtl. nicht mehr genutzten Telefonnetzadressen unterschieden werden können.

Gemäß einer Ausführungsform ist die Speichervorrichtung ausgebildet, doppelte Telefonnetzadressen, insbesondere Telefonnetzadressen mit unterschiedlichen Schreibweisen aber gleichem Empfänger, zu löschen, um Duplikate zu vermeiden.

Gemäß einer Ausführungsform ist die Speichervorrichtung ausgebildet, in der Datenbank zwischengespeicherte Telefonnetzadressen in regelmäßigen zeitlichen Abständen an die Telefonnetz-Missbrauchserkennungsvorrichtung zu übertragen, und die Telefonnetzadressen nach einem voreingestellten Zeitintervall aus der Datenbank zu löschen. Dadurch wird der Vorteil erreicht, dass veraltete oder nicht mehr genutzte Telefonnetzadressen aus der Speichervorrichtung gelöscht und somit der Speicherplatzbedarf in der Speichervorrichtung reduziert werden kann.

Gemäß einer Ausführungsform ist der Telefonanlagenserver über eine Kommunikationsschnittstelle mit einem Kommunikationsnetzwerk, insbesondere dem Internet, verbindbar, wobei der Telefonanlagenserver ausgebildet ist, über die Kommunikationsschnittstelle den Steuerbefehl zum Aufbau der Telefonverbindung zwischen dem emulierten Nebenstellenteilnehmer und dem Telefonnetzteilnehmer zu empfangen. Dadurch wird der Vorteil erreicht, dass die Angriffsentität effizient Steuerbefehle zum Aufbauen der Telefonverbindung an den Telefonanlagenserver, insbesondere den PBX-Honeypot, aussenden kann.

Gemäß einem zweiten Aspekt betrifft die Erfindung ein Verfahren zur Missbrauchserkennung in einem öffentlichen Telefonnetz, an welches ein Telefonnetzteilnehmer angeschaltet ist, mit Emulieren eines Nebenstellenteilnehmers einer Telefonanlage in dem öffentlichen Telefonnetz mit einem Telefonanlagenserver, um die Existenz des emulierten Nebenstellenteilnehmers der Telefonanlage gegenüber einer Angriffsentität vorzutäuschen, Empfangen eines Steuerbefehls von der Angriffsentität zum Aufbauen einer Telefonverbindung zwischen dem emulierten Nebenstellenteilnehmer und dem Telefonnetzteilnehmer in dem öffentlichen Telefonnetz, Aussenden einer Verbindungsanfrage an den Telefonnetzteilnehmer ansprechend auf das Empfangen des Steuerbefehls, um den Aufbau der Telefonverbindung zwischen dem emulierten Nebenstellenteilnehmer und dem Telefonnetzteilnehmer zu initialisieren, wobei die Verbindungsanfrage eine Telefonnetzadresse des Telefonnetzteilnehmers umfasst, Übertragen der Telefonnetzadresse des Telefonnetzteilnehmers an eine Telefonnetz-Missbrauchserkennungsvorrichtung, und Erkennen eines Missbrauchsversuchs in dem öffentlichen Telefonnetz, insbesondere in einem Teilnehmernetz des öffentlichen Telefonnetzes, auf der Basis der übertragenen Telefonnetzadresse des Telefonnetzteilnehmers. Dadurch wird der Vorteil erreicht, dass Telefonnetzadressen von Angreifern genutzter Telefonnetzteilnehmer effizient erfasst werden können. Auf der Basis dieser Telefonnetzadressen kann eine Missbrauchserkennung im Telefonnetz und eine Erkennung von erneuten Angriffen bzw. Missbrauchsversuchen erfolgen.

Die Erfindung kann in Software und/oder in Hardware realisiert werden.

Weitere Ausführungsbeispiele werden bezugnehmend auf die beiliegenden Zeichnungen näher erläutert. Es zeigen:
- Fig. 1: eine schematische Darstellung eines Telefonie-Kommunikationssystems zur Missbrauchserkennung in einem öffentlichen Telefonnetz gemäß einer Ausführungsform;
- Fig. 2: eine schematische Darstellung eines Telefonie-Kommunikationssystems zur Missbrauchserkennung in einem öffentlichen Telefonnetz gemäß einer Ausführungsform;
- Fig. 3: eine schematische Darstellung eines Telefonanlagenservers gemäß einer Ausführungsform; und
- Fig. 4: ein Ablaufdiagramm eines Verfahrens zur Missbrauchserkennung in einem öffentlichen Telefonnetz gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist. Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

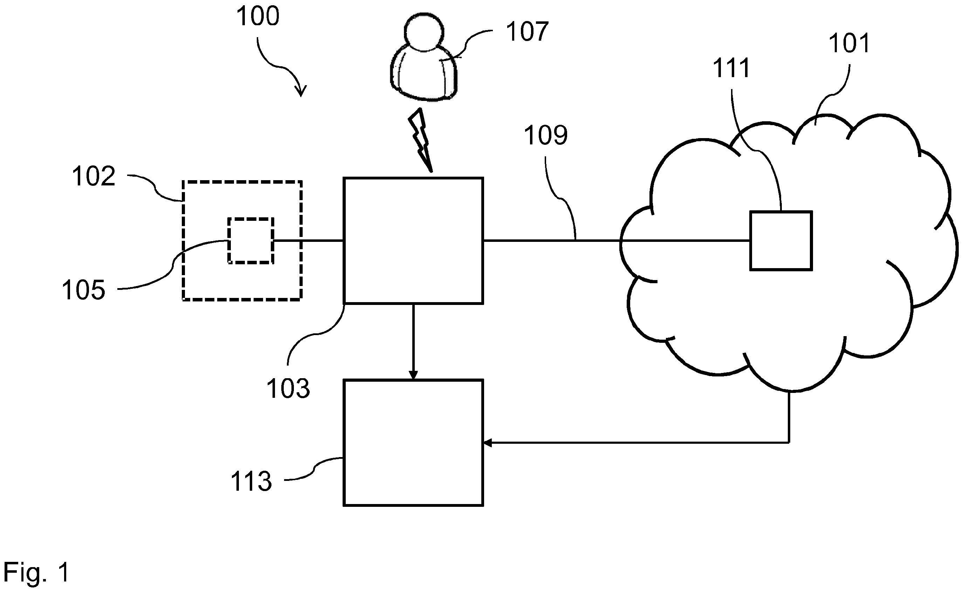

Fig. 1 zeigt eine schematische Darstellung eines Telefonie-Kommunikationssystems 100 zur Missbrauchserkennung in einem öffentlichen Telefonnetz 101 gemäß einer Ausführungsform, wobei ein Telefonnetzteilnehmer 111 an das öffentliche Telefonnetz 101 angeschaltet ist.

Das Telefonie-Kommunikationssystem 100 umfasst einen Telefonanlagenserver 103, welcher an das öffentliche Telefonnetz 101 angeschaltet und ausgebildet ist, einen Nebenstellenteilnehmer 105 einer Telefonanlage 102 in dem öffentlichen Telefonnetz 101 zu emulieren, um die Existenz des emulierten Nebenstellenteilnehmers 105 gegenüber einer Angriffsentität 107 vorzutäuschen, wobei der Telefonanlagenserver 103 ausgebildet ist, von der Angriffsentität 107 einen Steuerbefehl zum Aufbauen einer Telefonverbindung 109 zwischen dem emulierten Nebenstellenteilnehmer 105 und dem Telefonnetzteilnehmer 111 in dem öffentlichen Telefonnetz 101 zu empfangen, wobei der Telefonanlagenserver 103 ausgebildet ist, ansprechend auf das Empfangen des Steuerbefehls eine Verbindungsanfrage an den Telefonnetzteilnehmer 111 auszusenden, um den Aufbau der Telefonverbindung 109 zwischen dem emulierten Nebenstellenteilnehmer 105 und dem Telefonnetzteilnehmer 111 zu initialisieren, wobei die Verbindungsanfrage eine Telefonnetzadresse des Telefonnetzteilnehmers 111 in dem öffentlichen Telefonnetz 101 umfasst, und einer Telefonnetz-Missbrauchserkennungsvorrichtung 113, wobei der Telefonanlagenserver 103 ausgebildet ist, die Telefonnetzadresse des Telefonnetzteilnehmers 111 an die Telefonnetz-Missbrauchserkennungsvorrichtung 113 zu übertragen, wobei die Telefonnetz-Missbrauchserkennungsvorrichtung 113 ausgebildet ist, einen Missbrauchsversuch in dem öffentlichen Telefonnetz 101 auf der Basis der übertragenen Telefonnetzadresse des Telefonnetzteilnehmers 111 zu erkennen.

Der Telefonanlagenserver 103 kann als zweiter Telefonnetzteilnehmer oder als Telefonanlage an das öffentliche Telefonnetz 101 angeschaltet sein. Der Telefonanlagenserver 103 ist ausgebildet, den Nebenstellenteilnehmer 105 der Telefonanlage 102 zu emulieren, insbesondere als Nebenstellenteilnehmer 105 einer Telefonanlage 102. Hierbei kann der Telefonanlagenserver 103 den Nebenstellenteilnehmer 105 und die zugehörige Telefonanlage 102 des Nebenstellenteilnehmers 105 emulieren. Der Telefonanalgenserver 103 kann die Telefonanlage 102 als eine Telefonanlage emulieren, welche an das öffentliche Telefonnetz 101 angeschaltet ist. Ferner kann der Telefonanalgenserver 103 selbst als Telefonanlage ausgebildet sein, und kann selbst die Telefonanlage 102 des emulierten Nebenstellenteilnehmers 105 bilden. Die Emulation des Nebenstellenteilnehmers 105 und/oder der Telefonanlage 102 durch den Telefonanlagenserver 103 kann die Nachbildung, insbesondere die virtuelle Nachbildung, oder die Simulation des Nebenstellenteilnehmers 105 und/oder der Telefonanlage 102 durch den Telefonanalgenserver 103 umfassen.

Der Telefonanlagenserver 103 umfasst oder bildet ein Telefonanlagen-Lockvogelsystem, einen Telefonanlagen-Honeypot oder einen PBX-Honeypot. Der Telefonanlagenserver 103 kann ferner eine IP- Telefonanlage, insbesondere Voice-over-IP-Telefonanlage oder eine IP-PBX auf der Basis der Open-Source-Software Asterisk oder einer anderen Voice-over-IP-Telefonanlagensoftware, umfassen. Der Telefonanlagenserver 103 kann mit dem Internet und/oder dem Telefonnetz verbunden sein, und kann ausgebildet sein, über das Internet und/oder das Telefonnetz Steuerbefehle zum Aufbau von Telefonverbindungen 109 mit Telefonnetzteilnehmern in dem öffentlichen Telefonnetz 101 zu empfangen.

Der Telefonanlagenserver 103 kann über eine Teilnehmeranschlussleitung mit dem öffentlichen Telefonnetz 101 bzw. mit einem Teilnehmernehmernetz eines Telefonnetzbetreibers verbunden sein. Der Telefonanlagenserver 103 kann auch über einen Anlagenanschluss, beispielsweise einen Primärmultiplexeranschluss oder SIP-Trunk, mit dem öffentlichen Telefonnetz verbunden sein. Der Anlagenanschluss des Telefonanalgenserver 103 kann als "All-IP-Anschluss", beispielsweise ein Internet-Anschluss mit Voice-over-IP, ausgebildet sein. Ferner kann der Telefonanlagenserver 103 einen Internetanschluss und einen separaten Telefonanschluss, beispielsweise einen ISDN-Anschluss oder einen Primärmultiplexeranschluss, umfassen, über den abgehende Telefonverbindungen ins öffentliche Netz ausgegeben werden können.

Der Telefonanlagenserver 103 kann einen Speicher zum Speichern der Telefonnetzadressen und einen Prozessor zur Steuerung der Emulation des Nebenstellenteilnehmers 105 umfassen. Der Prozessor kann ferner ausgebildet sein den Steuerbefehl der Angriffsentität 107 zu verarbeiten und den Verbindungsaufbau zu initialisieren.

Die Angriffsentität 107 kann ein Angreifer, ein Hacker oder ein Fraudster, oder ein von einem Angreifer, einem Hacker oder einem Fraudster genutzte Entität, beispielsweise ein Server oder ein Computer, sein. Die Angriffsentität 107 kann den Telefonanlagenserver 103 über das Internet oder das Telefonnetz ausfindig machen und mit Steuerbefehlen zum Aufbauen von Telefonverbindungen 109 ansteuern. Ferner kann die Angriffsentität 107 den Telefonanlagenserver 103 über das Telefonnetz 101 mit Steuerbefehlen ansteuern, insbesondere wenn der Telefonanlagenserver 103 einen ISDN-Anschluss umfasst. Die Angriffsentität 107 ruft hierzu beispielsweise die Durchwahlnummer einer Nebenstelle an, um mit einer Sprachmailbox verbunden zu werden. Die Angriffsentität 107 versucht anschließend, beispielsweise über Eingabe von DTMF-Steuerbefehlen, über die Telefonleitung die Sprachmailbox zu steuern, um diese zum Aufbau einer abgehenden Sprachverbindung zu missbrauchen ("Call-Through"). Der Telefonanlagenserver 103 kann ausgebildet sein, auf den Durchwahlnummern der emulierten Nebenstelle 105 eine Sprachmailbox zu emulieren, um der Angriffsentität 107 eine Übermittlung von Steuerbefehlen über die emulierte Sprachmailbox zu ermöglichen.

Die von der Angriffsentität 107 übermittelten Steuerbefehle können jeweils eine Kennung des emulierten Nebenstellenteilnehmers 105, insbesondere eine Nebenstellenrufnummer des emulierten Nebenstellenteilnehmers 105, ein Passwort des emulierten Nebenstellenteilnehmers 105 und die Telefonnetzadresse des Telefonnetzteilnehmers 111, umfassen. Die Steuerbefehle können ferner jeweils die IP-Adresse der Angriffsentität 107 umfassen. Alternativ kann der Telefonanlagenserver 103 ausgebildet sein, die IP-Adresse der Angriffsentität 107 zu erfassen und zu speichern.

Die Angriffsentität 107 sendet zum Beispiel eine Vielzahl an Steuerbefehlen an den Telefonanlagenserver 103, um die Nebenstellenrufnummer und das Passwort des emulierten Nebenstellenteilnehmers 105 zu erraten. Der Telefonanlagenserver 103 kann dabei ausgebildet sein, den emulierten Nebenstellenteilnehmer 105 mit einem besonders leicht zu erratenden Passwort wie "123456" und einer besonders kurzen oder offensichtlichen Nebenstellenrufnummer zu emulieren, um die Wahrscheinlichkeit eines erfolgreichen Angriffs zu erhöhen und gleichzeitig eine aus Sicht der Angriffsentität 107 glaubwürdige Telefonanlage mit überwindbaren Sicherheitsmaßnahmen vorzutäuschen.

Die Telefonnetzadresse des Telefonnetzteilnehmers 111 kann eine Telefonnummer bzw. eine Rufnummer oder eine Zielrufnummer oder eine SIP-URI des Telefonnetzteilnehmers in dem öffentlichen Telefonnetz 101 umfassen. Die Telefonnummer kann eine Vorwahl, insbesondere eine Ländervorwahl, umfassen. Der Telefonanlagenserver 103 kann ausgebildet sein, den Verbindungsaufbau nur bei Vorwählen einer Kennziffer, beispielsweise "0", vor die Telefonnummer zu initialisieren. Die Angriffsentität 107 kann deshalb eine Vielzahl an Steuerbefehlen mit Telefonnummern des Telefonnetzteilnehmers 111 mit jeweils unterschiedlichen vorgewählten Kennziffern an den Telefonanlagenserver 103 senden, um die richtige Kennziffer zu erraten.

Der Telefonnetzteilnehmer 111 ist beispielsweise eine weitere Telefonanlage, insbesondere eine Telefonanlage mit einer IRSF-Zielrufnummer, oder ein Mobiltelefon. Das Mobiltelefon kann sich im Besitzt des Angreifers befinden. Die Angriffsentität 107 kann an eine Verbindungsanfrage an das Mobiltelefon zu Testzwecken senden insbesondere um Kennziffern zu testen, oder um zu testen ob der Telefonanlagenserver einen Anruf an eine Telefonnummer mit einer Auslands-Ländervorwahl gestattet. Der Telefonnetzteilnehmer 111 kann ferner ein virtueller Telefonnetzteilnehmer oder ein emulierter Telefonnetzteilnehmer sein, welches beispielsweise von einem mit dem öffentlichen Telefonnetz 101 verbundenen Server erzeugt wird. Die Telefonnetzadresse des Telefonnetzteilnehmers 111 kann eine Premiumrufnummer sein, an deren Umsatz der Angreifer beteiligt ist.

Das öffentliche Telefonnetz 101 kann Anschlüsse in verschiedenen Ländern oder geografischen Regionen umfassen. Beispielsweise ist der Telefonnetzteilnehmer 111 in einem anderen Land an das öffentliche Telefonnetz 101 angeschlossen als der Telefonanlagenserver 103. Das öffentliche Telefonnetz 101 kann ferner eine Vielzahl von Teilnehmer- bzw. Verbindungsnetze umfassen. Der Telefonanlagenserver 103 ist beispielsweise an ein Teilnehmernetz eines Teilnehmernetzbetreibers angeschaltet, und der Telefonnetzteilnehmer 111 ist beispielsweise an ein weiteres Teilnehmernetz eines weiteren Teilnehmernetzbetreibers angeschaltet. Das Teilnehmernetz und das weitere Teilnehmernetz können über ein Verbindungsnetz verbunden sein.

Das Telefonie-Kommunikationssystem 100 kann zur Missbrauchserkennung in einem Teilnehmernetz des öffentlichen Telefonnetzes 101 ausgebildet sein. Insbesondere kann die Telefonnetz-Missbrauchserkennungsvorrichtung 113 ausgebildet sein, Missbrauchsversuche in einem Teilnehmernetz des öffentlichen Telefonnetzes 101 zu erkennen.

Der Telefonanlagenserver 103 kann ferner ausgebildet sein, im Falle eines Zustandekommens einer Telefonverbindung 109 zwischen dem emulierten Nebenstellenteilnehmer 105 und dem Telefonnetzteilnehmer 111 Verkehrsdaten der Telefonverbindung 109, beispielsweise eine Dauer der Telefonverbindung 109, zu erfassen und zu speichern.

Gemäß einer Ausführungsform ist der Telefonanlagenserver 103 ausgebildet, die Verbindungsanfrage, insbesondere die Telefonnetzadresse des Telefonnetzteilnehmers 111 und/oder den zugehörigen Steuerbefehl in einer Look-up-Table zu speichern.

Gemäß einer Ausführungsform ist der Telefonanlagenserver 103 ferner ausgebildet, eine Netzwerkadresse der Angriffsentität 107, insbesondere eine IP-Adresse der Angriffsentität 107, zu erfassen und in der Look-up-Table zu speichern. Der Telefonanlagenserver 103 kann ferner ausgebildet sein, bei Zustandekommen der Telefonverbindung 109 mit dem Telefonnetzteilnehmer 111 die Verkehrsdaten der Telefonverbindung 109, beispielsweise eine Dauer der Telefonverbindung 109, in der Look-up-Table zu speichern. Die Look-up-Table kann eine Datenbank bilden und kann eine Vielzahl an Telefonnetzwerkadressen umfassen, die von dem Telefonanlagenserver 103 über ein bestimmtes Zeitintervall erfasst wurden.

Gemäß einer Ausführungsform umfasst der Telefonanlagenserver 103 eine Visualisierungseinrichtung zur Visualisierung der Look-up-Table. Der Telefonanlagenserver 103 kann über einen Computer ansteuerbar sein, um auf die Look-up-Table zuzugreifen und diese zu visualisieren. Beispielsweise mittels eines Datenvisualisierungs-Plugins wie Kibana. Die Look-up-Table kann dabei mittels einer Suchmaschine bzw. einem Suchserver (search server) wie Elasticsearch durchsuchbar bzw. sortierbar sein.

Gemäß einer Ausführungsform ist der Telefonanlagenserver 103 ausgebildet, in der Look-up-Table gespeicherte Telefonnetzadressen auf der Basis einer einstellbaren Übertragungsregel an die Telefonnetz-Missbrauchserkennungsvorrichtung 113 zu übertragen.

Die Übertragungsregel kann festlegen, dass nur Telefonnetzadressen mit ausländischen Zielrufnummern übertragen werden. Das Übertragen der Telefonnetzadressen kann ein Exportieren der Telefonnetzadressen umfassen.

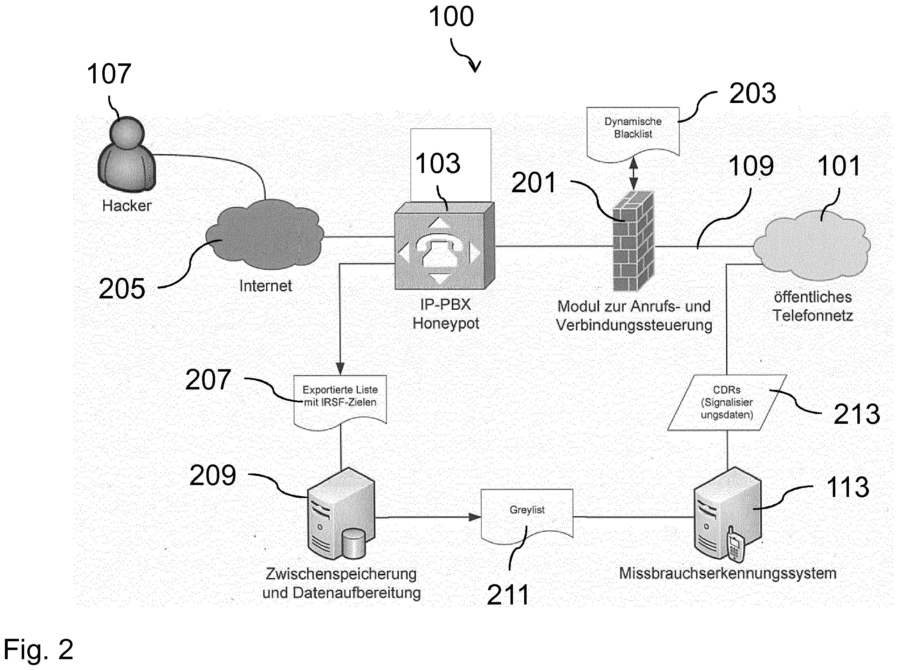

Fig. 2 zeigt eine schematische Darstellung des Telefonie-Kommunikationssystems 100 zur Missbrauchserkennung in dem öffentlichen Telefonnetz 101 gemäß einer weiteren Ausführungsform.

Das Telefonie-Kommunikationssystem 100 in Fig. 2 umfasst eine Verbindungssteuerungsvorrichtung 201 mit einer dynamischen Referenzliste 203, welche zwischen den Telefonanlagenserver 103 und das öffentliche Telefonnetz 101 zwischengeschaltet ist, eine von dem Telefonanlagenserver exportierte Liste 207 mit IRSF-Zielen, eine Speichervorrichtung 209, eine von der Telefonnetz-Missbrauchserkennungsvorrichtung 113 genutzte Greylist 211 und Signalisierungsdaten 213, welche von der Telefonnetz-Missbrauchserkennungsvorrichtung 113 ausgewertet werden.

Das Telefonie-Kommunikationssystem 100 in Fig. 2 zeigt ferner den Zugriff der Angriffsentität 107 auf den Telefonanlagenserver 103 über das Internet 205.

Die Verbindungssteuerungsvorrichtung 201 kann ausgebildet sein, die Verbindungsanfrage des Telefonanlagenservers 103 zu empfangen und zum Aufbauen der Telefonverbindung 109 an den Telefonnetzteilnehmer 111 in dem öffentlichen Telefonnetz 101 weiterzuleiten.

Die Verbindungssteuerungsvorrichtung 201 kann einen Voice-over-IP Gateway und/oder einen SIP-Proxy, insbesondere einen SIP-Proxyserver, umfassen. Die Verbindungssteuerungsvorrichtung kann den Telefonanlagenserver 103 mit dem öffentlichen Telefonnetz verbinden. 101 Die Verbindungssteuerungsvorrichtung 201 kann als Modul zur Anrufs- und Verbindungssteuerung ausgebildet sein.

Die Verbindungssteuerungsvorrichtung 201 kann eine dynamische Referenzliste 203 umfassen oder kann ausgebildet sein, auf eine dynamische Referenzliste 203 zuzugreifen, wobei die dynamische Referenzliste 203 Telefonnetzadressen von Telefonnetzteilnehmern in dem öffentlichen Telefonnetz 101 umfasst, insbesondere von solchen, welche bereits in der Vergangenheit von Angriffsentitäten 107 genutzt wurden. Die dynamische Referenzliste 203 kann eine dynamische Blacklist der Verbindungssteuerungsvorrichtung 201 bilden.

Die Verbindungssteuerungsvorrichtung 201 kann ausgebildet sein, die Telefonnetzadresse des Telefonnetzteilnehmers 111 vor der Weiterleitung der Verbindungsanfrage mit Telefonnetzadressen in der dynamischen Referenzliste 203 bzw. Blacklist zu vergleichen. Die Verbindungssteuerungsvorrichtung 201 kann dabei ausgebildet sein, die Verbindungsanfrage nicht weiterzuleiten, wenn die Telefonnetzadresse in der dynamischen Referenzliste 203 bereits enthalten ist. Somit kann sichergestellt werden, dass ein Verbindungsaufbau nur mit nicht bereits bekannten Telefonnetzteilnehmern zustande kommen kann. Die Angriffsentität kann somit veranlasst werden Steuerbefehle zum Verbindungsaufbau mit noch unbekannten Telefonnetzteilnehmern auszusenden, wodurch ein besonders effizientes Erfassen von möglichst vielen Telefonnetzadressen von unbekannten von der Angriffsentität 107 genutzten Telefonnetzteilnehmern ermöglicht wird.

Gemäß einer Ausführungsform ist die Verbindungssteuerungsvorrichtung 201 ausgebildet, die Telefonnetzadresse des Telefonnetzteilnehmers 111 nach Weiterleitung der Verbindungsanfrage in der dynamischen Referenzliste 203 zu speichern.

Gemäß einer weiteren Ausführungsform ist die Verbindungssteuerungsvorrichtung 201 ausgebildet, die aufgebaute Telefonverbindung 109 zwischen dem emulierten Nebenstellenteilnehmer 105 und dem Telefonnetzteilnehmer 111 nach einem voreingestellten Zeitintervall zu unterbrechen. Die Verbindungssteuerungsvorrichtung 201 stellt somit sicher, dass keine lang andauernde Telefonverbindung 109 mit IRSF-Zielrufnummern, insbesondere internationalen IRSF-Zielrufnummern, zustande kommen kann. Auf diese Art und Weise können hohe Kosten vermieden werden.

Um Mehrfachanwahlen zu derselben Telefonnetzadresse, insbesondere Rufnummern, in dem öffentlichen Telefonnetz 101 zu vermeiden können die folgenden einfachen Regeln in der Verbindungssteuerungsvorrichtung 201 implementiert werden:
1. Wenn eine Rufnummer das erste Mal angewählt wird (die Rufnummer ist noch nicht in der Blacklist 203 enthalten), dann wird die Anwahl bzw. der Verbindungsaufbau zugelassen.
2. Wenn eine Telefonverbindung 109 zu einer angewählten Rufnummer zustande kommt (der Angerufene bzw. der Telefonnetzteilnehmer 111 nimmt die Verbindung entgegen), dann wird die neue Rufnummer in der dynamischen Blacklist 203 gespeichert.
3. Wenn eine Telefonverbindung 109 zu einer Rufnummer besteht, dann wird die Verbindung nach einem voreingestellten Zeitintervall unterbrochen. (Begrenzung der Verbindungsdauer zur Kostenminimierung).
4. Wenn eine Rufnummer wiederholt angewählt wird, nachdem eine Telefonverbindung 109 bestanden hat (die angewählte Rufnummer ist bereits in der dynamischen Blacklist 203 enthalten), dann wird die Anwahl nicht zugelassen (d.h. die Verbindungssteuerungsvorrichtung 201 stellt den Verbindungswunsch nicht in das öffentliche Telefonnetz 101 durch).
   Durch das Abbrechen bestehender Telefonverbindungen 109 nach kurzer Verbindungszeit und die Verhinderung der wiederholten Anwahl können inaktive IRSF-Zielrufnummern und netzseitige Sperren simuliert werden. Dadurch kann die Angriffsentität 107 motiviert werden, immer neue IRSF-Zielrufnummern anzuwählen. Der Telefonanlagenserver 103 kann somit eine maximale Anzahl verwendeter IRSF-Zielrufnummern aufzeichnen.

Die Speichervorrichtung 209 ist in Fig. 2 zwischen den Telefonanlagenserver 103 und die Telefonnetz-Missbrauchserkennungsvorrichtung 113 zwischengeschaltet.

Die Speichervorrichtung 209 kann ausgebildet sein von dem Telefonanlagenserver 103 eine Liste 207 der gesammelten Telefonnetzadressen zu empfangen und zur Datenaufbereitung in einer Datenbank zwischenzuspeichern, und die zwischengespeicherten Telefonnetzadressen nach der Datenaufbereitung an die Telefonnetz-Missbrauchserkennungsvorrichtung 113 auszusenden. Dabei werden insbesondere Zeitstempel mitgespeichert, zu denen diese Telefonnetzadressen aufgezeichnet wurden. Der Zeitstempel kann ferner den Zeitpunkt des Aussendens der zu der Telefonnetzadresse zugehörigen Verbindungsanfrage angeben.

Die Liste 207 kann die in dem Telefonanlagenserver 103 gespeicherte Look-up-Table zumindest teilweise umfassen, insbesondere kann die Liste 207 die in der Look-up-Table gespeicherten Telefonnetzadressen zumindest teilweise umfassen.

Die Speichervorrichtung 209 kann somit einem Zwischenspeicher in dem Telefonie-Kommunikationssystem 100 zur Datenaufbereitung und Datenverwaltung bilden. Die Speichervorrichtung 209 kann hierzu einen Speicher, insbesondere einen Server-Speicher oder einen Netzwerkspeicher, umfassen, in welchem die Liste bzw. die Datenbank abgespeichert ist.

Angriffsentitäten 107 wie Telefonanlagenhacker oder von ihnen genutzte Geräte erneuern die Rufnummern, die sie zur Terminierungsentgeltgenerierung missbrauchen, meist regelmäßig, so dass neue Rufnummern nach einigen Monaten meist nicht mehr genutzt werden. In der Speichervorrichtung 209 können daher veraltete Einträge nach einer gewissen Zeit gelöscht werden. Die Löschfrist für veraltete Rufnummern kann dabei konfigurierbar bzw. einstellbar sein.

Die Speichervorrichtung 209 kann ausgebildet sein, in regelmäßigen Zeitabständen, beispielsweise einmal täglich, eine Greylist 211 zu generieren. Die Greylist 211 enthält beispielsweise alle IRSF-Zielrufnummern, die aktuell von Angriffsentitäten 107 zur Terminierungsentgeltgenerierung genutzt werden und die mit dem Telefonanlagenserver 103 aufgezeichnet wurden, in einem kanonischen Format (z. B. nach ITU-T Empfehlung E.123).

Die Speichervorrichtung 209 kann sicherstellen, dass die Greylist 211 keine Rufnummern doppelt, beispielsweise in unterschiedlichen Schreibweisen, enthält. Die im PBX-Honeypot aufgezeichneten Rufnummern können zunächst kanonisiert, d.h. in ein einheitliches Format gebracht werden und anschließend um Duplikate und veraltete Einträge bereinigt werden.

Vorzugsweise kann der Zwischenspeicher noch weitere Funktionen umfassen, wie beispielsweise die Aggregation von fortlaufenden Rufnummern zu Rufnummerngassen. Dabei kann vorzugsweise der folgende Algorithmus verwendet werden, wobei die Rufnummern R den Telefonnetzadressen entsprechen: (i) Sortiere alle Rufnummern R im Zwischenspeicher aufsteigend. (ii) Wenn in der sortierten Liste eine Teilliste R_{1,n}, ... ,R_{m,n} mit m Ziffernfolgen (Rufnummern) der Länge n existiert, deren ersten n - 1 Ziffern gleich sind, dann werden diese zu einer einzigen Ziffernfolge R_{x,n-1} der Länge n - 1 (Rufnummerngasse) zusammengefasst. (iii) Wiederhole den letzten Schritt, bis die Bedingung nicht mehr erfüllt ist.

Durch den Parameter m kann gesteuert werden, wie viele unterschiedliche Rufnummern, bei denen sich nur die letzte Ziffer unterscheidet, vorhanden sein müssen, bevor diese zu einer Gasse (ohne die letzte Ziffer) zusammengefasst werden, beispielsweise vier oder fünf Rufnummern.

Die Speichervorrichtung 209 kann ausgebildet sein, die zusammengefassten Telefonnetzadressen, insbesondere die Rufnummerngassen, an die Telefonnetz-Missbrauchserkennungsvorrichtung 113 zu übertragen, insbesondere in Form der Greylist 211 zu übertragen.

Durch die Aggregation von Rufnummern zu Rufnummerngassen kann die Länge der Greylist 211 weiter verkleinert werden.

Die Telefonnetz-Missbrauchserkennungsvorrichtung 113 in Fig. 2 kann einen Speicher, insbesondere einen Server-Speicher oder einen Netzwerkspeicher umfassen. In dem Speicher können die von dem Telefonanlagenserver 103 bzw. der Speichervorrichtung 209 übertragenen Telefonnetzadressen, insbesondere die Greylist, gespeichert werden.

Die Telefonnetz-Missbrauchserkennungsvorrichtung 113 kann ein Missbrauchserkennungssystem bilden, welches Verbindungsdatensätze (CDRs, Call Detail Records) aus dem öffentlichen Telefonnetz 101, insbesondere aus einem Teilnehmernetz des öffentlichen Telefonnetzes 101, verarbeitet. Dabei können nicht nur die Datensätze von erfolgreichen Verbindungen verarbeitet werden, sondern auch die Datensätze von Anwählversuchen, also Signalisierungsdaten 213, bei denen keine Verbindung zustande kam, beispielsweise weil die Zielrufnummer gesperrt war oder weil der Angerufene nicht geantwortet hat.

Die Telefonnetz-Missbrauchserkennungsvorrichtung 113 bzw. das Missbrauchserkennungssystem kann ausgebildet sein, von weiteren Telefonnetzteilnehmern in dem öffentlichen Telefonnetz 101 Signalisierungsdaten 213 zu empfangen, wobei die Signalisierungsdaten 213 Telefonnetzadressen von Verbindungsanfragen umfassen. Die Telefonnetz-Missbrauchserkennungsvorrichtung 113 kann ferner ausgebildet sein, die Telefonnetzadressen der Signalisierungsdaten 213 mit in der Greylist 211 gespeicherten Telefonnetzadressen zu vergleichen, um Verbindungsanfragen der weiteren Telefonnetzteilnehmer an Telefonnetzteilnehmer mit in der Greylist 211 gespeicherten Telefonnetzadressen zu detektieren. Zu diesem Zweck kann die Greylist 211 in die Telefonnetz-Missbrauchserkennungsvorrichtung 113 bzw. das Missbrauchserkennungssystem importiert sein.

Gemäß einer Ausführungsform ist die Telefonnetz-Missbrauchserkennungsvorrichtung 113 ausgebildet, bei der Detektion von Verbindungsanfragen an Telefonnetzteilnehmer mit in der Greylist 211 gespeicherten Telefonnetzadressen ein Warnsignal auf der Basis einer Filterregel auszusenden, insbesondere an den Telefonnetzbetreiber oder den Telefonnetzteilnehmer, der die entsprechende Verbindungsanfrage oder Verbindungsanfragen aussendet, oder an beide.

Die Telefonnetz-Missbrauchserkennungsvorrichtung 113 kann ausgebildet sein, ein Warnsignal auszusenden, wenn sie einen Missbrauch auf der Basis der Filterregel detektiert.

In der Praxis kann es jedoch vorkommen, dass von einem Anschluss eines Teilnehmers in dem öffentlichen Telefonnetz 101 eine oder mehrere Telefonnetzadressen auf der Greylist 211 angewählt werden, beispielsweise weil der Telefonnetzteilnehmer eine internationale Rufnummer anwählt, die auch von einer Angriffsentität 107 verwendet wird (Number Hijacking) oder weil sich der Telefonnetzteilnehmer verwählt hat. Wenn aber in einem kurzen Zeitraum viele unterschiedliche Zielrufnummern, auch in unterschiedlichen Ländern, von einem Anschluss eines Telefonnetzteilnehmers angewählt werden, die vorher in der Telefonanlage als IRSF-Zielrufnummern detektiert wurden, dann ist die Wahrscheinlichkeit hoch, dass eine Angriffsentität 107 eine Telefonanlage am betroffenen Anschluss steuert, insbesondere um einen Missbrauch durchzuführen oder vorzubereiten.

In der Telefonnetz-Missbrauchserkennungsvorrichtung 113 kann aus diesem Grund eine Filterregel eingerichtet werden, um Angriffe auf Telefonanlagen von einer gewöhnlichen Nutzung der Telefonanlagen an den Anschlüssen zu unterscheiden. Die Filterregel kann das Risiko eines irrtümlichen Aussendens der Warnmeldung verringern.

Vorzugsweise wird die Filterregel wie folgt definiert: Ein in Warnsignal an den Telefonnetzbetreiber oder einen Telefonnetzteilnehmer wird nur ausgesendet wenn (i) innerhalb von vier Stunden 20 Anwählversuche zu Zielrufnummern auf der Greylist 211 durchgeführt werden, und (ii) mindestens vier unterschiedliche Zielrufnummern auf der Greylist 211 angewählt werden, und (iii) Zielrufnummern auf der Greylist 211 in mindestens drei unterschiedlichen Zielländern angewählt werden.

Das Warnsignal kann eine Missbrauchswarnung an den Telefonnetzteilnehmer umfassen, der die Verbindungsanfragen an von Angreifer genutzte Endgeräte aussendet. Die Warnmeldung kann das Versenden einer Nachricht, insbesondere einer Sprachnachricht oder einer SMS, an eine hinterlegte Telefonnummer des Teilnehmers, und/oder das Versenden einer E-Mail an eine hinterlegte E-Mailadresse des Telefonnetzteilnehmers umfassen.

Ferner können bei Erkennen eines Angriffs auf eine Telefonanlage weitere Gegenmaßnahmen, beispielsweise eine Auslandssperre für den betroffenen Anschluss, eingeleitet werden.

Die Angriffsentität 107 wird häufig zunächst eine Test-Rufnummer anwählen, bevor sie beginnt, die IRSF-Zielrufnummern anzurufen. Mit der Test-Rufnummer kann die Angriffsentität 107 testen, welches Wähl-Präfix bei der betreffenden Telefonanlage vorgewählt werden muss, um ein "Amt" zu erhalten und eine internationale Verbindung aufzubauen.

Dabei werden meist internationale Mobilfunkrufnummern, insbesondere von Prepaid-SIM-Karten verwendet. Wenn in dem Mobiltelefon des Angreifers ein Anruf von der gehackten Telefonanlage eingeht, dann hat die Angriffsentität 107 das korrekte Wähl-Präfix gefunden.

Eine weitere Ausgestaltung der Erfindung besteht deshalb darin, diese Testrufnummern, welche vor den eigentlichen IRSF-Zielen angewählt werden, in einer separaten Liste zu importieren und somit einen entsprechenden Alarmfilter zu generieren, der bereits bei der Anwahl bekannter Testrufnummern durch Telefonanlagen einen Alarm auslöst.

Vorzugsweise werden die beiden Listen, insbesondere die Greylist 211 und die separate Liste, und auf den Listen basierende Filterregeln kombiniert, um Fehlalarme zu vermeiden. Eine Filterregel für die Testrufnummern kann zur Erzeugung eines Voralarms und eine Filterregel für die IRSF-Zielen kann zur Erzeugung eines Hauptalarms genutzt werden.

Um möglichst frühzeitig eine gehackte Telefonanlage zu erkennen und den Teilnehmer zu informieren, kann gemäß einer Ausführungsform der Alarm nur auf der Basis der Testrufnummern erzeugt werden.

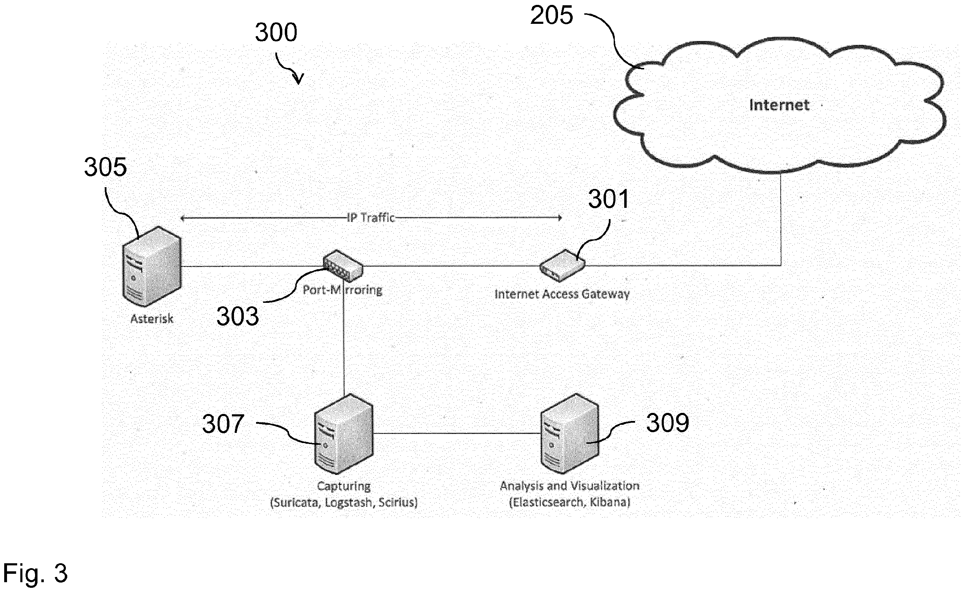

Fig. 3 zeigt eine schematische Darstellung des Telefonanlagenservers 300 gemäß einer Ausführungsform. Die Telefonanlagenserver 103 in Fig. 1 und Fig. 2 können gemäß der Ausführungsform des Telefonanlagenservers 300 in Fig. 3 ausgebildet sein.

Der Telefonanlagenserver 300 in Fig. 3 umfasst eine Kommunikationsschnittstelle 301, einen Netzwerk-Switch 303, eine Steuereinrichtung 305, eine Erfassungseinrichtung 307 und eine Analyse- und Visualisierungseinrichtung 309. Der Telefonanlagenserver 300 bildet ein Honeypot-System bzw. einen PBX-Honeypot.

Der Telefonanlagenserver 300 kann über die Kommunikationsschnittstelle 301 mit dem Internet 205 verbindbar sein. Die Kommunikationsschnittstelle 301 kann einen Internet Access Gateway umfassen.

Der Telefonanlagenserver 300 ist ausgebildet, über die Kommunikationsschnittstelle 301 Steuerbefehle zum Aufbau von Telefonverbindungen zwischen einem von der Steuereinrichtung 305 emulierten Nebenstellenteilnehmer und einem Endgerät in dem öffentlichen Telefonnetz zu empfangen.

Die Steuereinrichtung 305 kann eine Telefonanlage, insbesondere eine Voice-over-IP-Telefonanlage, bilden. Hierzu kann insbesondere die Open-Source-Software Asterisk eingesetzt werden. Die Steuereinrichtung 305 kann dabei den PBX-Honeypot bilden. Über den Netzwerk-Switch 307, welcher insbesondere als Port-Mirroring-Einrichtung, ausgebildet ist, können Erfassungseinrichtung 307 und die Analyse- und Visualisierungseinrichtung 309 eingebunden werden.

Die Erfassungseinrichtung 307 kann in dem Datenverkehr zwischen dem Internet 205 und der Steuereinrichtung 305 eingehende Steuerbefehle von Angriffsentitäten 107 erfassen. Die Erfassungseinrichtung 307 kann hierzu Software zur Detektion von Angriffen wie Suricata, Software zum Sammeln und Weiterleiten von Daten wie Logstash, und ein Web Interface wie Scirius nutzten. Mit der Erfassungseinrichtung 307 können somit Angriffe der Angriffsentität 107 auf die Steuereinrichtung 305 aufgezeichnet werden. Die Erfassungseinrichtung kann die Angriffe in einer Look-up-Table speichern.

Mittels der Analyse- und Visualisierungseinrichtung 309 können die gesammelten Daten, insbesondere die in der Look-up-Table gespeicherten Daten, visualisiert werden. Die Analyse- und Visualisierungseinrichtung 309 kann hierzu ein Datenvisualisierungs-Plugin wie Kibana umfassen. Die Look-up-Table kann mittels einer Suchmaschine bzw. einem Suchserver (search server) wie Elasticsearch durchsuchbar bzw. sortierbar sein.

Beispielsweise ist der Telefonanlagenserver bzw. die Analyse- und Visualisierungseinrichtung 309 über einen Computer ansteuerbar, um auf die Look-up-Table zuzugreifen und diese zu visualisieren.

Angriffsentitäten 107 wie Telefonanlagenhacker oder von ihnen genutzte Vorrichtungen können den Honeypot-IP-PBX im Internet finden und ihre Angriffsversuche starten. Dabei versuchen sie beispielsweise einerseits, verwendete Nebenstellenrufnummern und zugehörige Kennwörter zu erraten bzw. mit bekannten Angriffsmethoden wie Wörterbuchangriffen systematisch zu ermitteln, und andererseits, Verbindungen zu internationalen Rufnummern aufzubauen.

Die Angriffe können in der Erfassungseinrichtung 307 aufgezeichnet werden und können in der Analyse- und Visualisierungseinrichtung 309 ausgewertet werden. Insbesondere können alle internationalen Zielrufnummern, die von den Angriffsentitäten 107 angewählt wurden, ausgewertet und exportiert werden.

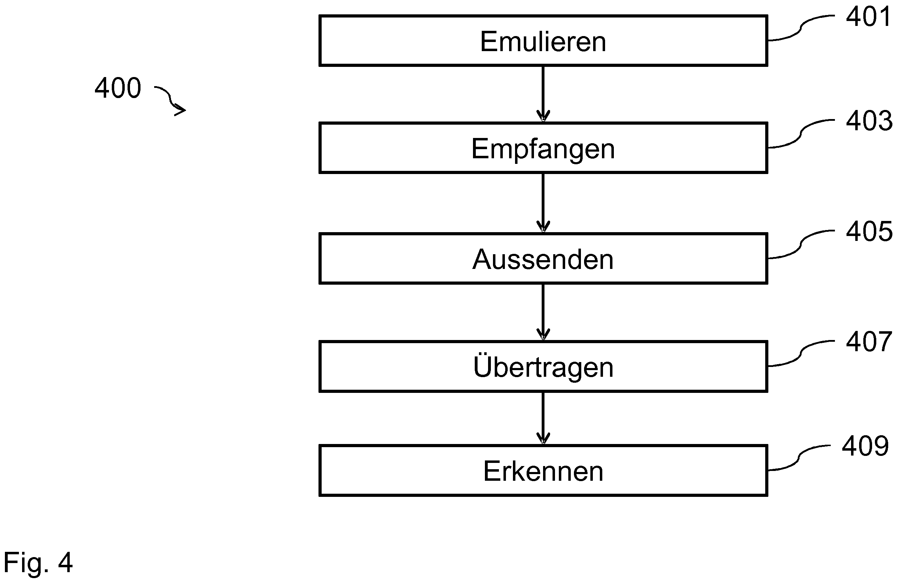

Fig. 4 zeigt ein Ablaufdiagramm eines Verfahrens 400 zur Missbrauchserkennung im öffentlichen Telefonnetz 101, an welches der Telefonnetzteilnehmer 111 angeschaltet ist, gemäß einer Ausführungsform.

Das Verfahren 400 umfasst ein Emulieren 401 eines Nebenstellenteilnehmers 105 einer Telefonanlage 102 in dem öffentlichen Telefonnetz 101 mit einem Telefonanlagenserver 103, welcher an das öffentliche Telefonnetz 101 angeschaltet ist, um die Existenz des emulierten Nebenstellenteilnehmers 105 gegenüber einer Angriffsentität 107 vorzutäuschen, ein Empfangen 403 eines Steuerbefehls von der Angriffsentität 107 zum Aufbauen der Telefonverbindung 109 zwischen dem emulierten Nebenstellenteilnehmer 105 und dem Telefonnetzteilnehmer 111 in dem öffentlichen Telefonnetz 101, ein Aussenden 405 einer Verbindungsanfrage an den Telefonnetzteilnehmer 111 ansprechend auf das Empfangen des Steuerbefehls, um den Aufbau der Telefonverbindung 109 zwischen dem emulierten Nebenstellenteilnehmer 105 und dem Telefonnetzteilnehmer 111 zu initialisieren, wobei die Verbindungsanfrage eine Telefonnetzadresse des Telefonnetzteilnehmers 111 umfasst, ein Übertragen 407 der Telefonnetzadresse des Telefonnetzteilnehmers 111 an eine Telefonnetz-Missbrauchserkennungsvorrichtung 113, und ein Erkennen 409 eines Missbrauchsversuchs in dem öffentlichen Telefonnetz 101, insbesondere in einem Teilnehmernetz des öffentlichen Telefonnetzes, auf der Basis der übertragenen Telefonnetzadresse des Telefonnetzteilnehmers 111.

Die Angriffsentität 107 wird meist versuchen systematisch eine umfangreiche Liste von internationalen Zielrufnummern anzuwählen, beispielsweise um IRSF zu nutzen. Die angewählten Rufnummern sind dabei häufig nicht auf ein bestimmtes Land oder geografisch auf eine bestimmte Weltregion beschränkt, sondern verteilten sich oft auf verschiedene Länder und Regionen. Ein Teil dieser Rufnummern ist beispielsweise bereits in der Vergangenheit missbräuchlich genutzt und daher evtl. bereits in der Vergangenheit gesperrt worden.

Die Rufnummern werden beispielsweise von der gehackten Telefonanlage im Minutentakt automatisiert mit Hilfe einer Liste systematisch angewählt, bis die Angriffsentität 107 eine Rufnummer findet, zu der eine signifikant lange Telefonverbindung zustande kommt. Nachdem dies von der Angriffsentität 107 registriert wird, wählt sie diese Rufnummern meist mehrfach, beispielsweise über hundert Mal mit einer Verbindungsdauer von beispielsweise 20 bis 30 Minuten an.

Das Testen der unterschiedlichen internationalen Zielrufnummern durch die Angriffsentität 107 bis eine gewinnversprechende Rufnummer gefunden wird, dauert beispielsweise zwei Stunden. Dieser Zeitraum wird von herkömmlichen Missbrauchserkennungssystemen jedoch meist nicht für die Missbrauchserkennung genutzt, da die Anwählversuche zu gesperrten Rufnummerngassen oder die kurzzeitigen Verbindungen zu inaktiven IRSF-Zielen meist nicht registriert werden bzw. die Summe der Verbindungsdauern noch weit unter dem eingerichteten Schwellwerten liegen. Erst nachdem die Angriffsentität 107 mehrfach hintereinander eine Rufnummer mit signifikant langer Verbindungsdauer anruft, wird der Schwellwert von herkömmlichen Missbrauchserkennungssystemen erreicht und ein Missbrauchsalarm von diesen ausgelöst.

Das vorliegende Telefonie-Kommunikationssystem 100 macht sich diese Beobachtung der Angriffsmuster zunutze. Die beobachteten Zielrufnummern können im verwendeten Telefonanlagenserver 103 bzw. in der Telefonnetz-Missbrauchserkennungsvorrichtung 113 in einer Greylist 211 hinterlegt werden, so dass bei Anwahl einer Rufnummer aus dieser Liste bestimmte Aktionen ausgelöst werden können.

Eine Greylist 211 enthält dabei beispielsweise eine möglichst umfangreiche Liste von Zielrufnummern, die aktuell von Telefonanlagenhackern zur IRSF-Terminierungsentgeltgenerierung genutzt werden. Sobald die Telefonnetz-Missbrauchserkennungsvorrichtung 113 Anwählversuche von einem Telefonanlagen Anschluss zu mehreren dieser Rufnummern, die netzseitig auch gesperrt sein können, registriert, kann ein Missbrauchsalarm ausgelöst werden.

Der Vorteil dieser Vorgehensweise besteht darin, dass eine gehackte Telefonanlage an einem (Telefonanlagen-)Anschluss bereits frühzeitig während der (erfolglosen) Anwählversuche des Angreifers 107 zu einschlägigen, gesperrten Zielrufnummern erkannt werden kann. Der Missbrauchsalarm kann dadurch früher ausgelöst werden und es können frühzeitiger Gegenmaßnahmen ergriffen werden.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können.

### Bezugszeichenliste

- 100: Telefonie-Kommunikationssystem
- 101: öffentliches Telefonnetz
- 102: emulierte Telefonanlage
- 103: Telefonanlagenserver
- 105: emulierter Nebenstellenteilnehmer
- 107: Angriffsentität
- 109: Telefonverbindung
- 111: Telefonnetzteilnehmer
- 113: Telefonnetz-Missbrauchserkennungsvorrichtung

- 201: Verbindungssteuerungsvorrichtung
- 203: dynamische Referenzliste
- 205: Internet
- 207: Liste
- 209: Speichervorrichtung
- 211: Greylist
- 213: Signalisierungsdaten

- 300: Telefonanlagenserver
- 301: Kommunikationsschnittstelle
- 303: Netzwerk-Switch
- 305: Steuereinrichtung
- 307: Erfassungseinrichtung
- 309: Analyse- und Visualisierungseinrichtung

- 400: Verfahren zur Missbrauchserkennung in einem öffentlichen Telefonnetz
- 401: Emulieren
- 403: Empfangen
- 405: Aussenden
- 407: Übertragen
- 409: Erkennen

## Patentansprüche

1. Telefonie-Kommunikationssystem (100) zur Missbrauchserkennung in einem öffentlichen Telefonnetz (101), an welches ein Telefonnetzteilnehmer (111) angeschaltet ist, mit:
einem Telefonanlagenserver (103), welcher einen Telefonanlagen-Honeypot bildet und welcher ausgebildet ist, einen Nebenstellenteilnehmer (105) einer Telefonanlage (102) in dem öffentlichen Telefonnetz (101) mit einer Nebenstellenrufnummer und einem Passwort zu emulieren, um die Existenz des emulierten Nebenstellenteilnehmers (105) der Telefonanlage (102) gegenüber einer Angriffsentität (107) vorzutäuschen;
wobei der Telefonanlagenserver (103) ausgebildet ist, von der Angriffsentität (107) einen Steuerbefehl zum Aufbauen einer Telefonverbindung (109) zwischen dem emulierten Nebenstellenteilnehmer (105) und dem Telefonnetzteilnehmer (111) in dem öffentlichen Telefonnetz (101) zu empfangen;
wobei der Telefonanlagenserver (103) ausgebildet ist, ansprechend auf das Empfangen des Steuerbefehls eine Verbindungsanfrage an den Telefonnetzteilnehmer (111) auszusenden, um den Aufbau der Telefonverbindung (109) zwischen dem emulierten Nebenstellenteilnehmer (105) und dem Telefonnetzteilnehmer (111) zu initialisieren, wobei die Verbindungsanfrage eine Telefonnetzadresse des Telefonnetzteilnehmers (111) in dem öffentlichen Telefonnetz (101) umfasst;
einer Verbindungssteuerungsvorrichtung (201), welche zwischen den Telefonanlagenserver (103) und das öffentliche Telefonnetz (101) zwischengeschaltet ist, wobei die Verbindungssteuerungsvorrichtung (201) ausgebildet ist, die Verbindungsanfrage des Telefonanlagenservers (103) zu empfangen und zum Aufbauen der Telefonverbindung (109) an den Telefonnetzteilnehmer (111) in dem öffentlichen Telefonnetz (101) weiterzuleiten; und
einer Telefonnetz-Missbrauchserkennungsvorrichtung (113), wobei der Telefonanlagenserver (103) ausgebildet ist, die Telefonnetzadresse des Telefonnetzteilnehmers (111) an die Telefonnetz-Missbrauchserkennungsvorrichtung (113) zu übertragen, wobei die Telefonnetz-Missbrauchserkennungsvorrichtung (113) ausgebildet ist, einen Missbrauchsversuch in dem öffentlichen Telefonnetz (101) auf der Basis der übertragenen Telefonnetzadresse des Telefonnetzteilnehmers (111) zu erkennen.

2. Telefonie-Kommunikationssystem (100) nach Anspruch 1, wobei die Verbindungssteuerungsvorrichtung (201) ausgebildet ist, die Telefonnetzadresse des Telefonnetzteilnehmers (111) vor der Weiterleitung der Verbindungsanfrage mit Telefonnetzadressen in einer dynamischen Referenzliste (203), insbesondere einer dynamischen Blacklist, zu vergleichen, wobei die Verbindungssteuerungsvorrichtung (201) ausgebildet ist, die Verbindungsanfrage nicht weiterzuleiten, wenn die Telefonnetzadresse in der dynamischen Referenzliste (203) enthalten ist.

3. Telefonie-Kommunikationssystem (100) nach Anspruch 2, wobei die Verbindungssteuerungsvorrichtung (201) ausgebildet ist, die Telefonnetzadresse des Telefonnetzteilnehmers (111) nach Weiterleitung der Verbindungsanfrage in der dynamischen Referenzliste (203) zu speichern.

4. Telefonie-Kommunikationssystem (100) nach Anspruch 2 oder 3, wobei die Verbindungssteuerungsvorrichtung (201) ausgebildet ist, die aufgebaute Telefonverbindung (109) zwischen dem emulierten Nebenstellenteilnehmer (105) und dem Telefonnetzteilnehmer (111) nach einem voreingestellten Zeitintervall zu unterbrechen.

5. Telefonie-Kommunikationssystem (100) nach einem der vorstehenden Ansprüche, wobei der Telefonanlagenserver (103) ausgebildet ist, die Verbindungsanfrage, insbesondere die Telefonnetzadresse des Telefonnetzteilnehmers (111), und/oder den zugehörigen Steuerbefehl in einer Look-up-Table zu speichern.

6. Telefonie-Kommunikationssystem (100) nach Anspruch 5, wobei der Telefonanlagenserver (103) eine Visualisierungseinrichtung (309) zur Visualisierung der Look-up-Table umfasst.

7. Telefonie-Kommunikationssystem (100) nach Anspruch 5 oder 6, wobei der Telefonanlagenserver (103) ausgebildet ist, in der Look-up-Table gespeicherte Telefonnetzadressen, insbesondere die Telefonnetzadresse des Telefonnetzteilnehmers (111), auf der Basis einer einstellbaren Übertragungsregel an die Telefonnetz-Missbrauchserkennungsvorrichtung (113) zu übertragen.

8. Telefonie-Kommunikationssystem (100) nach einem der vorstehenden Ansprüche, wobei die Telefonnetz-Missbrauchserkennungsvorrichtung (113) einen Speicher zum Speichern der Telefonnetzadresse des Telefonnetzteilnehmers (111), insbesondere in einer in dem Speicher hinterlegten Greylist (211), umfasst.

9. Telefonie-Kommunikationssystem (100) nach Anspruch 8, wobei die Telefonnetz-Missbrauchserkennungsvorrichtung (113) ausgebildet ist, Signalisierungsdaten (213) von weiteren Telefonnetzteilnehmern in dem öffentlichen Telefonnetz (101), insbesondere von weiteren Telefonnetzteilnehmern in einem Teilnehmernetz des öffentlichen Telefonnetzes (101), zu verarbeiten, wobei die Signalisierungsdaten (213) Telefonnetzadressen von Verbindungsanfragen der weiteren Telefonnetzteilnehmer umfassen, wobei die Telefonnetz-Missbrauchserkennungsvorrichtung (113) ausgebildet ist, die Telefonnetzadressen der Signalisierungsdaten (213) mit in dem Speicher gespeicherten Telefonnetzadressen zu vergleichen, um Verbindungsanfragen der weiteren Telefonnetzteilnehmer in dem öffentlichen Telefonnetz (101) an Telefonnetzteilnehmer, deren Telefonnetzadressen in dem Speicher gespeichert sind, zu detektieren.

10. Telefonie-Kommunikationssystem (100) nach Anspruch 9, wobei die Telefonnetz-Missbrauchserkennungsvorrichtung (113) ausgebildet ist, bei der Detektion von Verbindungsanfragen der weiteren Telefonnetzteilnehmer in dem öffentlichen Telefonnetz (101) an Telefonnetzteilnehmer, deren Telefonnetzadressen in dem Speicher gespeichert sind, ein Warnsignal auf der Basis einer Filterregel auszusenden.

11. Telefonie-Kommunikationssystem (100) nach Anspruch 10, wobei die Filterregel eine Mehrzahl an Bedingungen, insbesondere ein Detektieren einer voreingestellten Anzahl an Verbindungsanfragen an einen oder mehrere Telefonnetzteilnehmer, deren Telefonnetzadressen in dem Speicher gespeichert sind, und ein Detektieren von Verbindungsanfragen an eine voreingestellte Anzahl unterschiedlicher Telefonnetzteilnehmer, deren Telefonnetzadressen in dem Speicher gespeichert sind, umfasst, wobei die Telefonnetz-Missbrauchserkennungsvorrichtung (113) ausgebildet ist, das Warnsignal ansprechend auf das Erfüllen der Mehrzahl an Bedingungen der Filterregel durch einen weiteren Telefonnetzteilnehmer in dem öffentlichen Telefonnetz, insbesondere in einem Teilnehmernetz des öffentlichen Telefonnetzes, auszusenden.

12. Telefonie-Kommunikationssystem (100) nach einem der vorstehenden Ansprüche, wobei das Telefonie-Kommunikationssystem (100) eine Speichervorrichtung (209) umfasst, welche zwischen den Telefonanlagenserver (103) und die Telefonnetz-Missbrauchserkennungsvorrichtung (113) zwischengeschaltet ist, wobei die Speichervorrichtung (209) ausgebildet ist, die Telefonnetzadresse des Telefonnetzteilnehmers (111) vor der Übertragung an die Telefonnetz-Missbrauchserkennungsvorrichtung (113) zur Datenaufbereitung in einer Datenbank zwischenzuspeichern.

13. Telefonie-Kommunikationssystem (100) nach Anspruch 12, wobei die Speichervorrichtung (209) ausgebildet ist, in der Datenbank zwischengespeicherte Telefonnetzadressen hinsichtlich einer Charakteristik der Telefonnetzadressen, insbesondere einer Ziffernfolge der Telefonnetzadressen, zusammenzufassen und die zusammengefassten Telefonnetzadressen an die Telefonnetz-Missbrauchserkennungsvorrichtung (113), insbesondere in Form der Greylist (211), zu übertragen.

14. Telefonie-Kommunikationssystem (100) nach Anspruch 12 oder 13, wobei die Speichervorrichtung (209) ausgebildet ist, in der Datenbank zwischengespeicherte Telefonnetzadressen in regelmäßigen zeitlichen Abständen an die Telefonnetz-Missbrauchserkennungsvorrichtung (113) zu übertragen, und die Telefonnetzadressen nach einem voreingestellten Zeitintervall aus der Datenbank zu löschen.

15. Verfahren (400) zur Missbrauchserkennung in einem öffentlichen Telefonnetz (101), an welches ein Telefonnetzteilnehmer (111) angeschaltet ist, mit:
Emulieren (401) eines Nebenstellenteilnehmers (105) einer Telefonanlage (102) in dem öffentlichen Telefonnetz (101) mit einer Nebenstellenrufnummer und einem Passwort mittels eines Telefonanlagenservers (103), welcher einen Telefonanlagen-Honeypot bildet, um die Existenz des emulierten Nebenstellenteilnehmers (105) der Telefonanlage (102) gegenüber einer Angriffsentität (107) vorzutäuschen;
Empfangen (403) eines Steuerbefehls von der Angriffsentität (107) zum Aufbauen einer Telefonverbindung (109) zwischen dem emulierten Nebenstellenteilnehmer (105) und dem Telefonnetzteilnehmer (111) in dem öffentlichen Telefonnetz (101);
Aussenden (405) einer Verbindungsanfrage an den Telefonnetzteilnehmer (111) ansprechend auf das Empfangen des Steuerbefehls, um den Aufbau der Telefonverbindung (109) zwischen dem emulierten Nebenstellenteilnehmer (105) und dem Telefonnetzteilnehmer (111) zu initialisieren, wobei die Verbindungsanfrage eine Telefonnetzadresse des Telefonnetzteilnehmers (111) umfasst;
Empfangen der Verbindungsanfrage des Telefonanlagenservers (103) mit einer Verbindungssteuerungsvorrichtung (201), welche zwischen den Telefonanlagenserver (103) und das öffentliche Telefonnetz (101) zwischengeschaltet ist;
Weiterleiten der Verbindungsanfrage an den Telefonnetzteilnehmer (111) in dem öffentlichen Telefonnetz (101) mit der Verbindungssteuerungsvorrichtung (201) zum Aufbauen der Telefonverbindung (109);
Übertragen (407) der Telefonnetzadresse des Telefonnetzteilnehmers (111) an eine Telefonnetz-Missbrauchserkennungsvorrichtung (113); und
Erkennen (409) eines Missbrauchsversuchs in dem öffentlichen Telefonnetz (101) auf der Basis der übertragenen Telefonnetzadresse des Telefonnetzteilnehmers (111).

## Claims

1. A telephony communications system (100) for detecting abuse in a public telephone network (101) to which a telephone network subscriber (111) is connected, comprising:
a telephone system server (103) which forms a telephone system honey pot and which is configured to emulate an extension subscriber (105) of a telephone system (102) in the public telephone network (101) with an extension number and a password in order to simulate the existence of the emulated extension subscriber (105) of the telephone system (102) vis-à-vis an attacking entity (107);
wherein the telephone system server (103) is configured to receive a control command from the attacking entity (107) to establish a telephone connection (109) between the emulated extension subscriber (105) and the telephone network subscriber (111) in the public telephone network (101);
wherein the telephone system server (103) is configured to send a connection request to the telephone network subscriber (111) in response to receiving the control command in order to initiate the establishment of the telephone connection (109) between the emulated extension subscriber (105) and the telephone network subscriber (111), wherein the connection request includes a telephone network address of the telephone network subscriber (111) in the public telephone network (101);
a connection control device (201) which is connected between the telephone system server (103) and the public telephone network (101), wherein the connection control device (201) is configured to receive the connection request of the telephone system server (103) and to relay said request to the telephone network subscriber (111) in the public telephone network (101) in order to establish the telephone connection (109); and a telephone network abuse detection device (113), wherein the telephone system server (103) is configured to transmit the telephone network address of the telephone network subscriber (111) to the telephone network abuse detection device (113), wherein the telephone network abuse detection device (113) is configured to detect an abuse attempt in the public telephone network (101) on the basis of the transmitted telephone network address of the telephone network subscriber (111).

2. The telephony communications system (100) according to claim 1, wherein the connection control device (201) is configured to compare the telephone network address of the telephone network subscriber (111) with telephone network addresses in a dynamic reference list (203), in particular a dynamic blacklist, before relaying the connection request, wherein the connection control device (201) is configured to not relay the connection request when the telephone network address is contained in the dynamic reference list (203).

3. The telephony communications system (100) according to claim 2, wherein the connection control device (201) is configured to store the telephone network address of the telephone network subscriber (111) in the dynamic reference list (203) after relaying the connection request.

4. The telephony communications system (100) according to claim 2 or 3, wherein the connection control device (201) is configured to break the established telephone connection (109) between the emulated extension subscriber (105) and the telephone network subscriber (111) after a predefined period of time.

5. The telephony communications system (100) according to any one of the preceding claims, wherein the telephone system server (103) is configured to store the connection request, in particular the telephone network address of the telephone network subscriber (111), and/or the associated control command in a look-up table.

6. The telephony communications system (100) according to claim 5, wherein the telephone system server (103) comprises a visualization apparatus (309) for visualizing the look-up table.

7. The telephony communications system (100) according to claim 5 or 6, wherein the telephone system server (103) is configured to transmit telephone network addresses stored in the look-up table, in particular the telephone network address of the telephone network subscriber (111), on the basis of an adjustable transmission rule to the telephone network abuse detection device (113).

8. The telephony communications system (100) according to any one of the preceding claims, wherein the telephone network abuse detection device (113) comprises a memory for storing the telephone network address of the telephone network subscriber (111), in particular in a greylist (211) stored in the memory.

9. The telephony communications system (100) according to claim 8, wherein the telephone network abuse detection device (113) is configured to process signaling data (213) from other telephone network subscribers in the public telephone network (101), in particular from other telephone network subscribers in a subscriber network of the public telephone network (101), wherein the signaling data (213) comprise telephone network addresses of connection requests from the other telephone network subscribers, wherein the telephone network abuse detection device (113) is configured to compare the telephone network addresses in the signaling data (213) with telephone network addresses stored in the memory in order to detect connection requests from the other telephone network subscribers in the public telephone network (101) to telephone network subscribers whose telephone network addresses are stored in the memory.

10. The telephony communications system (100) according to claim 9, wherein the telephone network abuse detection device (113) is configured to emit an alert signal on the basis of a filter rule upon detection of connection requests from the other telephone network subscribers in the public telephone network (101) to telephone network subscribers whose telephone network addresses are stored in the memory.

11. The telephony communications system (100) according to claim 10, wherein the filter rule includes a plurality of conditions, in particular detecting a predefined number of connection requests to one or more telephone network subscribers whose telephone network addresses are stored in the memory, and detecting connection requests to a predefined number of different telephone network subscribers whose telephone network addresses are stored in the memory, wherein the telephone network abuse detection device (113) is configured to emit the alert signal in response to a plurality of filter rule conditions being met by another telephone network subscriber in the public telephone network, in particular a subscriber network of the public telephone network.

12. The telephony communications system (100) according to any one of the preceding claims, wherein the telephony communications system (100) comprises a storage device (209) connected between the telephone system server (103) and the telephone network abuse detection device (113), wherein the storage device (209) is configured to cache the telephone network address of the telephone network subscriber (111) in order to process the data in a database before transmitting it to the telephone network abuse detection device (113).

13. The telephony communications system (100) according to claim 12, wherein the storage device (209) is configured to collate telephone network addresses cached in the database in relation to a characteristic of the telephone network addresses, in particular a digit sequence of the telephone network addresses, and to transmit the collated telephone network addresses to the telephone network abuse detection device (113), in particular in the form of the greylist (211).

14. The telephony communications system (100) according to claim 12 or 13, wherein the storage device (209) is configured to transmit telephone network addresses cached in the database to the telephone network abuse detection device (113) at regular intervals, and to delete the telephone network addresses from the database after a predefined period of time.

15. A method (400) for detecting abuse in a public telephone network (101) to which a telephone network subscriber (111) is connected, comprising:
emulating (401) an extension subscriber (105) of a telephone system (102) in the public telephone network (101) with an extension number and a password by means of a telephone system server (103) forming a telephone system honey pot in order to simulate the existence of the emulated extension subscriber (105) of the telephone system (102) vis-à-vis an attacking entity (107);
receiving (403) a control command from the attacking entity (107) for establishing a telephone connection (109) between the emulated extension subscriber (105) and the telephone network subscriber (111) in the public telephone network (101);
sending (405) a connection request to the telephone network subscriber (111) in response to receiving the control command in order to initiate the establishment of the telephone connection (109) between the emulated extension subscriber (105) and the telephone network subscriber (111), wherein the connection request comprises a telephone network address of the telephone network subscriber (111);
receiving the connection request of the telephone system server (103) by means of a connection control device (201) which is connected between the telephone system server (103) and the public telephone network (101);
relaying the connection request to the telephone network subscriber (111) in the public telephone network (101) by means of the connection control device (201) in order to establish the telephone connection (109);
transmitting (407) the telephone network address of the telephone network subscriber (111) to a telephone network abuse detection device (113); and
detecting (409) an abuse attempt in the public telephone network (101) on the basis of the transmitted telephone network address of the telephone network subscriber (111).

## Revendications

1. Système de communication téléphonique (100) pour la détection d'une utilisation abusive dans un réseau téléphonique public (101) auquel est connecté un abonné du réseau téléphonique (111), comprenant :
un serveur d'installation téléphonique (103), formant un honeypot d'installation téléphonique et prévu pour émuler un abonné de station esclave (105) d'une installation téléphonique (102) dans le réseau téléphonique public (101) avec un numéro d'appel de station esclave et un mot de passe, pour simuler l'existence de l'abonné de station esclave (105) émulé de l'installation téléphonique (102) par rapport à une entité d'attaque (107) ;
où le serveur d'installation téléphonique (103) est prévu pour recevoir de l'entité d'attaque (107) une instruction de commande pour l'établissement d'une liaison téléphonique (109) entre l'abonné de station esclave (105) émulé et l'abonné du réseau téléphonique (111) dans le réseau téléphonique public (101) ;
le serveur d'installation téléphonique (103) étant prévu pour transmettre, en réaction à la réception de l'instruction de commande, une demande de connexion à l'abonné du réseau téléphonique (111), pour initialiser l'établissement de la liaison téléphonique (109) entre l'abonné de station esclave (105) émulé et l'abonné du réseau téléphonique (111), ladite demande de connexion comprenant une adresse de réseau téléphonique de l'abonné du réseau téléphonique (111) dans le réseau téléphonique public (101) ;
un dispositif de commande de connexion (201) monté entre le serveur d'installation téléphonique (103) et le réseau téléphonique public (101), ledit dispositif de commande de connexion (201) étant prévu pour recevoir la demande de connexion du serveur d'installation téléphonique (103) et transférer celle-ci à l'abonné du réseau téléphonique (111) dans le réseau téléphonique public (101) pour l'établissement de la liaison téléphonique (109) ; et
un dispositif de détection d'une utilisation abusive dans le réseau téléphonique (113), le serveur d'installation téléphonique (103) étant prévu pour transmettre l'adresse de réseau téléphonique de l'abonné du réseau téléphonique (111) au dispositif de détection d'une utilisation abusive dans le réseau téléphonique (113), ledit dispositif de détection d'une utilisation abusive dans le réseau téléphonique (113) étant prévu pour détecter une tentative d'utilisation abusive dans le réseau téléphonique public (101) sur la base de l'adresse de réseau téléphonique de l'abonné du réseau téléphonique (111) transmise.

2. Système de communication téléphonique (100) selon la revendication 1, où le dispositif de commande de connexion (201) est prévu pour comparer l'adresse de réseau téléphonique de l'abonné du réseau téléphonique (111) à des adresses de réseau téléphonique dans une liste de référence dynamique (203), en particulier une liste noire dynamique, avant transfert de la demande de connexion, le dispositif de commande de connexion (201) étant prévu pour ne pas transférer la demande de connexion si l'adresse de réseau téléphonique est contenue dans la liste de référence dynamique (203).

3. Système de communication téléphonique (100) selon la revendication 2, où le dispositif de commande de connexion (201) est prévu pour mémoriser dans la liste de référence dynamique (203) l'adresse de réseau téléphonique de l'abonné du réseau téléphonique (111) après transfert de la demande de connexion.

4. Système de communication téléphonique (100) selon la revendication 2 ou la revendication 3, où le dispositif de commande de connexion (201) est prévu pour interrompre la liaison téléphonique (109) établie entre l'abonné de station esclave (105) émulé et l'abonné du réseau téléphonique (111) une fois écoulé un intervalle temporel défini.

5. Système de communication téléphonique (100) selon l'une des revendications précédentes, où le serveur d'installation téléphonique (103) est prévu pour mémoriser dans une table de consultation la demande de connexion, en particulier l'adresse de réseau téléphonique de l'abonné du réseau téléphonique (111), et/ou l'instruction de commande correspondante.

6. Système de communication téléphonique (100) selon la revendication 5, où le serveur d'installation téléphonique (103) comprend un dispositif de visualisation (309) pour la visualisation de la table de consultation.

7. Système de communication téléphonique (100) selon la revendication 5 ou la revendication 6, où le serveur d'installation téléphonique (103) est prévu pour transmettre au dispositif de détection d'une utilisation abusive dans le réseau téléphonique (113) les adresses de réseau téléphonique mémorisées dans la table de consultation, en particulier l'adresse de réseau téléphonique de l'abonné du réseau téléphonique (111) sur la base d'une règle de transmission ajustable.

8. Système de communication téléphonique (100) selon l'une des revendications précédentes, où le dispositif de détection d'une utilisation abusive dans le réseau téléphonique (113) comprend une mémoire pour le stockage de l'adresse de réseau téléphonique de l'abonné du réseau téléphonique (111), en particulier dans une liste grise (211) archivée en mémoire.

9. Système de communication téléphonique (100) selon la revendication 8, où le dispositif de détection d'une utilisation abusive dans le réseau téléphonique (113) est prévu pour traiter des données de signalisation (213) d'autres abonnés du réseau téléphonique dans le réseau téléphonique public (101), en particulier d'autres abonnés du réseau téléphonique dans un réseau d'accès du réseau téléphonique public (101), où les données de signalisation (213) comprennent des adresses de réseau téléphonique de demandes de connexion des autres abonnés du réseau téléphonique, où le dispositif de détection d'une utilisation abusive dans le réseau téléphonique (113) est prévu pour comparer les adresses de réseau téléphonique des données de signalisation (213) avec les adresses de réseau téléphonique stockées en mémoire, pour détecter des demandes de connexion des autres abonnés du réseau téléphonique dans le réseau téléphonique public (101) à des abonnés du réseau téléphonique dont les adresses de réseau téléphonique sont stockées en mémoire.

10. Système de communication téléphonique (100) selon la revendication 9, où le dispositif de détection d'une utilisation abusive dans le réseau téléphonique (113) est prévu pour émettre un signal d'alerte sur la base d'une règle de filtrage lors de la détection de demandes de connexion des autres abonnés du réseau téléphonique dans le réseau téléphonique public (101) à des abonnés du réseau téléphonique dont les adresses de réseau téléphonique sont stockées en mémoire.

11. Système de communication téléphonique (100) selon la revendication 10, où la règle de filtrage comprend une pluralité de conditions, en particulier la détection d'un nombre prédéfini de demandes de connexion à un ou plusieurs abonnés du réseau téléphonique dont les adresses de réseau téléphonique sont stockées en mémoire, et la détection de demandes de connexion à un nombre prédéfini d'abonnés différents du réseau téléphonique dont les adresses de réseau téléphonique sont stockées en mémoire, où le dispositif de détection d'une utilisation abusive dans le réseau téléphonique (113) est prévu pour émettre le signal d'alerte en réaction à la satisfaction de la pluralité de conditions de la règle de filtrage par un autre abonné du réseau téléphonique dans le réseau téléphonique public, en particulier dans un réseau d'accès du réseau téléphonique public.

12. Système de communication téléphonique (100) selon l'une des revendications précédentes, où ledit système de communication téléphonique (100) comprend un dispositif de mémorisation (209) monté entre le serveur d'installation téléphonique (103) et le dispositif de détection d'une utilisation abusive dans le réseau téléphonique (113), ledit dispositif de mémorisation (209) étant prévu pour stocker provisoirement l'adresse de réseau téléphonique de l'abonné du réseau téléphonique (111) avant transmission au dispositif de détection d'une utilisation abusive dans le réseau téléphonique (113) pour traitement de données dans une base de données.

13. Système de communication téléphonique (100) selon la revendication 12, où le dispositif de mémorisation (209) est prévu pour regrouper des adresses de réseau téléphonique stockées dans la base de données sous l'aspect d'une caractéristique des adresses de réseau téléphonique, en particulier d'une suite de chiffres des adresses de réseau téléphonique, et transmettre les adresses de réseau téléphonique regroupées au dispositif de détection d'une utilisation abusive dans le réseau téléphonique (113), en particulier sous la forme de la liste grise (211).

14. Système de communication téléphonique (100) selon la revendication 12 ou la revendication 13, où le dispositif de mémorisation (209) est prévu pour transmettre à intervalles temporels réguliers des adresses de réseau téléphonique stockées dans la base de données au dispositif de détection d'une utilisation abusive dans le réseau téléphonique (113), et à supprimer de la base de données les adresses de réseau téléphonique une fois écoulé un intervalle temporel défini.

15. Procédé (400) de détection d'une utilisation abusive dans un réseau téléphonique public (101) auquel est connecté un abonné du réseau téléphonique (111), comprenant :
l'émulation (401) d'un abonné de station esclave (105) d'une installation téléphonique (102) dans le réseau téléphonique public (101) avec un numéro d'appel de station esclave et un mot de passe au moyen d'un serveur d'installation téléphonique (103) formant un honeypot d'installation téléphonique, pour simuler l'existence de l'abonné de station esclave (105) émulé de l'installation téléphonique (102) par rapport à une entité d'attaque (107) ;
la réception (403) d'une instruction de commande de l'entité d'attaque (107) pour l'établissement d'une liaison téléphonique (109) entre l'abonné de station esclave (105) émulé et l'abonné du réseau téléphonique (111) dans le réseau téléphonique public (101) ;
la transmission (405) d'une demande de connexion à l'abonné du réseau téléphonique (111) en réaction à la réception de l'instruction de commande, pour initialiser l'établissement de la liaison téléphonique (109) entre l'abonné de station esclave (105) émulé et l'abonné du réseau téléphonique (111), ladite demande de connexion comprenant une adresse de réseau téléphonique de l'abonné du réseau téléphonique (111) ;
la réception de la demande de connexion du serveur d'installation téléphonique (103) avec un dispositif de commande de connexion (201) monté entre le serveur d'installation téléphonique (103) et le réseau téléphonique public (101) ;
le transfert de la demande de connexion à l'abonné du réseau téléphonique (111) dans le réseau téléphonique public (101) avec le dispositif de commande de connexion (201) pour l'établissement de la liaison téléphonique (109) ;
la transmission (407) de l'adresse de réseau téléphonique de l'abonné du réseau téléphonique (111) à un dispositif de détection d'une utilisation abusive dans le réseau téléphonique (113) ; et
la détection (409) d'une tentative d'utilisation abusive dans le réseau téléphonique public (101) sur la base de l'adresse de réseau téléphonique de l'abonné du réseau téléphonique (111) transmise.
